# EUROPEAN PATENT APPLICATION

(11) **EP 3 382 483 A1**
(43) Date of publication of application: **03.10.2018**
(21) Application number: 16840369.9
(22) Date of filing: 08.11.2016
(51) Int. Cl.: G05B 23/02, F04B 49/10

(54) **INFORMATION PROCESSING SYSTEM, INFORMATION PROCESSING METHOD, INFORMATION PROCESSING DEVICE, TERMINAL DEVICE, WATER SUPPLY DEVICE, AND CONTROL METHOD FOR WATER SUPPLY DEVICE**

(30) Priority: 25.11.2015 JP 2015230043; 28.04.2016 JP 2016091001; 28.04.2016 JP 2016091003
(71) Applicant: EBARA CORPORATION, Ohta-ku Tokyo 144-8510 (JP)
(72) Inventor: OYAMA, Atsushi, Tokyo 144-8510 (JP); HARADA, Yosuke, Tokyo 144-8510 (JP); KANEDA, Kazuhiro, Tokyo 144-8510 (JP)
(74) Representative: Klang, Alexander H.
(86) International application number: PCT/JP2016/083051
(87) International publication number: WO 2017/090420

(57) **Abstract**

An information processing system includes a terminal apparatus that receives machine-type identification information identifying a machine type of a monitoring target apparatus and state history information indicating a history of a state of the monitoring target apparatus, from the monitoring target apparatus by near field communication, and that sends the received machine-type identification information and state history information, an information processing apparatus that receives the machine-type identification information and the state history information from the terminal apparatus, and a storage apparatus that accumulates machine-type identification information identifying a machine type of a monitoring target apparatus and normal-state history information in an associated manner, the normal-state history information being the state history information when the machine type is in a normal state. When the information processing apparatus receives the machine-type identification information and state history information about a certain monitoring target apparatus from the terminal apparatus, the information processing apparatus compares the normal-state history information accumulated in the storage apparatus in association with the machine-type identification information and the received state history information, judges whether an operation state of the monitoring target apparatus is normal, and sends a judgment result to the terminal apparatus. The terminal apparatus receives the judgment result from the information processing apparatus, and displays the received judgment result.

## Description

### Technical Field

The present invention relates to an information processing system, an information processing method, an information processing apparatus, a terminal apparatus, a water supply apparatus, and a control method for a water supply apparatus.

### Background Art

For a water supply apparatus that is installed in an apartment building and the like, consideration of the design is performed to a maximum extent, in order to prevent the occurrence of stoppage by failure, in light of the convenience for users. For example, multiple pump apparatuses are installed, and an alternate operation, a switching operation or the like is performed. Thus, the water supply apparatus is designed such that the maintenance can be performed without stoppage of the water supply function.

Even in the case of such a configuration, it is not possible to overlook the situation of the failure occurrence in a pump apparatus or a peripheral apparatus to be used with the pump apparatus. Therefore, when the failure of the pump apparatus or the peripheral apparatus occurs unexpectedly, repair/fixing work is required, and the burden of repair/fixing cost is suddenly imposed on the user.

For avoiding such a circumstance, in some cases, a remote monitoring system using a communication line is introduced, and the pump is constantly monitored by a remote monitoring apparatus (see Patent Literature 1, for example).

The water supply apparatus is widely used for supplying service water to a water supply object such as a building. As the water supply system of the water supply apparatus, there are known a water tank system in which the water in a water main is temporarily pooled in a water tank and the water in the water tank is fed to the water supply object by the pump, a direct coupled water supply system in which pressure boost is performed by the pump using the pressure of the water main and thereby the water is supplied to the water supply object, and the like.

The display of the information about the operation state of the water supply apparatus, generally, is performed by an operation panel provided on the water supply apparatus. Here, the water supply apparatus is sometimes installed in an electrically noisy environment such as a machine room or a pump room, and a seven-segment LED, indication lights and the like that have resistance to electric noise are used on the operation panel. Therefore, the operation panel has a relatively simplified configuration, resulting in the limitation of the information amount that can be transmitted to the user at one time. Meanwhile, conventionally, it has been proposed that the water supply apparatus includes a liquid crystal dot matrix display device and the operation condition of a control unit is displayed on the liquid crystal dot matrix display device.

Further, conventionally, a water supply apparatus allowing for the operation with a portable terminal has been proposed. Because of the operation of the water supply apparatus with the portable terminal, it is possible to simplify the operation panel of the water supply apparatus, and by using an operation unit of the portable terminal, even a user inexperienced in the water supply apparatus can easily operate the water supply apparatus.

In the water supply apparatus, the pump is controlled by the control unit, and for example, an estimated terminal pressure keeping control or a target pressure keeping control is performed based on the discharge-side pressure of the pump. Further, in the case where the water supply apparatus includes multiple pumps, the control of the number of operating pumps, and the control to perform the rotation of pumps that are activated are performed depending on water supply quantity. Such controls of the pump by the control unit are performed depending on the installation situation of the water supply apparatus and the water supply object, based on setting values (setting information) previously stored in a storage unit.

In some cases, it is required to change the setting information of the water supply apparatus depending on the change in the use condition of the building or the like and the change in the environment. Generally, the change in the setting information is performed by the operation panel provided in the water supply apparatus. However, typically, the water supply apparatus is automatically controlled, and therefore, there are few opportunities to operate the operation panel. Further, the water supply apparatus is sometimes installed in an electrically noisy environment such as a machine room or a pump room, and a seven-segment LED, indication lights and the like that have resistance to electric noise are used. Therefore, the operation panel has a relatively simplified configuration, and the operation for changing the setting information, which is infrequent, tends to be complex. Particularly, in the case of changing multiple pieces of setting information, the operation of the operation panel is complicated.

Then, in recent years, a water supply apparatus allowing for the operation with a portable terminal has been proposed. Because of the operation of the water supply apparatus with the portable terminal, it is possible to simplify the operation panel of the water supply apparatus, and by using an operation unit of the portable terminal, even a user inexperienced in the water supply apparatus can easily operate the water supply apparatus.

### Citation List

### Patent Literature

Patent Literature 1: JP2008-19763
Patent Literature 2: JP2014-173522
Patent Literature 3: JP2005-171788

### Summary of Invention

### Problem to be Solved

However, the remote monitoring system imposes the burden of connection fees for the communication line on the user, even though the failure occurrence itself is a very rare event, and therefore, there is a problem in that it is difficult to spread the remote monitoring system because of a low cost-effectiveness.

The present invention has been made in view of the above problem, and has an object to provide an information processing system, an information processing method, an information processing apparatus and a terminal apparatus that make it possible to monitor a monitoring target apparatus that is an object of monitoring, without imposing a cost burden on the user.

### Means for solving the problem

An information processing system according to the first aspect of the present invention comprises: a terminal apparatus that receives machine-type identification information identifying a machine type of a monitoring target apparatus and state history information indicating a history of a state of the monitoring target apparatus, from the monitoring target apparatus of a user by near field communication, and that sends the received machine-type identification information and state history information; an enterprise information processing apparatus that receives the machine-type identification information and the state history information from the terminal apparatus; and an enterprise storage apparatus that accumulates machine-type identification information identifying a machine type of a monitoring target apparatus and normal-state history information in an associated manner, the normal-state history information being the state history information when the machine type is in a normal state, wherein, when the enterprise information processing apparatus receives the machine-type identification information and state history information about a certain monitoring target apparatus from the terminal apparatus, the enterprise information processing apparatus compares the normal-state history information accumulated in the enterprise storage apparatus in association with the machine-type identification information and the received state history information, judges whether an operation state of the monitoring target apparatus is normal, and sends a judgment result to the terminal apparatus, and the terminal apparatus receives the judgment result from the enterprise information processing apparatus, and displays the received judgment result.

Thereby, the judgment result of whether the operation state of the monitoring target apparatus is normal is displayed on the terminal apparatus, and therefore, a service member to operate the terminal apparatus can check whether the operation state of the monitoring target apparatus is normal. According to the information processing system, the user does not need to subscribe a communication line, and therefore, it is possible to monitor the monitoring target apparatus that is an object of monitoring, without imposing the burden of connection fees for the communication line on the user.

An information processing system according to the second aspect of the present invention, the information processing system according to the first aspect of the information processing system, wherein, when the enterprise information processing apparatus judges that the operation state of the monitoring target apparatus is normal, the enterprise information processing apparatus stores the state history information in the enterprise storage apparatus, as the normal-state history information, in association with the machine-type identification information.

Thereby, in the case where it is judged that the operation state of the monitoring target apparatus is normal, the state history information is stored in the enterprise storage apparatus, as the normal-state history information, in association with the machine-type identification information, and therefore, the state history information when the operation state is normal is accumulated for each machine type. Thereby, when the judgment for the same machine type is performed next time, it is possible to compare the state history information to the many pieces of the accumulated normal-state history information, and therefore, it is possible to enhance the judgment accuracy.

An information processing system according to the third aspect of the present invention, the information processing system according to the first or second aspect of the information processing system, wherein the state history information contains operation-state history information indicating a history of the operation state of the monitoring target apparatus.

Thereby, it is possible to judge whether the operation state of the monitoring target apparatus is normal, using the operation-state history information.

An information processing system according to the fourth aspect of the present invention, the information processing system according to any one of the first to third aspect of the information processing system, wherein the state history information contains measurement-value history information indicating a history of a measurement value that is measured by a measuring instrument provided in the monitoring target apparatus.

Thereby, it is possible to judge whether the operation state of the monitoring target apparatus is normal, using the measurement-value history information.

An information processing system according to the fifth aspect of the present invention, the information processing system according to any one of the first to fourth aspect of the information processing system, wherein the enterprise storage apparatus, for each failure event, accumulates the state history information about the monitoring target apparatus before failure occurrence, the enterprise information processing apparatus, for each failure event, statistically processes the state history information before the failure occurrence accumulated in the enterprise storage apparatus, and determines a state change characteristic of before the failure occurrence, and the enterprise information processing apparatus compares the state history information about the certain monitoring target apparatus and the normal-state history information about the same machine type as the monitoring target apparatus stored in the enterprise storage apparatus, and judges whether the state change characteristic of before the failure occurrence is in the state history information about the certain monitoring target apparatus.

Thereby, it is possible to predict the occurrence of a future failure event. Since the state history information before the failure occurrence of the monitoring target apparatus is, as needed, accumulated in the enterprise storage apparatus for each failure event, it is possible to enhance the detection accuracy for a proper state change characteristic of before the failure occurrence.

An information processing system according to the sixth aspect of the present invention, the information processing system according to the fifth aspect of the information processing system, wherein the enterprise information processing apparatus sends information about the state change characteristic of before the failure occurrence and/or information about the failure event, to the terminal apparatus, and the terminal apparatus receives and displays the information about the state change characteristic of before the failure occurrence and/or the information about the failure event.

Thereby, a service member holding the terminal apparatus can recognize a state change characteristic of before the failure occurrence and/or a failure anticipated in the future, and therefore, it is possible to assist the judgment by an on-site service member.

An information processing system according to the seventh aspect of the present invention, the information processing system according to the fifth or sixth aspect of the information processing system, wherein, in the enterprise storage apparatus, the machine-type identification information, the state change characteristic of before the failure occurrence, a repair work content and/or a replacement-needed component are stored in an associated manner, for each machine type of the monitoring target apparatus, the enterprise information processing apparatus refers to the enterprise storage apparatus, extracts the repair work content and/or the replacement-needed component associated with the determined state change characteristic of before the failure occurrence and the machine-type identification information identifying the machine type of the monitoring target apparatus, from the enterprise storage apparatus, and sends information about the repair work content and/or the replacement-needed component, to the terminal apparatus, and the terminal apparatus receives the repair work content and/or the replacement-needed component from the enterprise information processing apparatus, and displays the repair work content and/or the replacement-needed component.

Thereby, it is possible to provide the information necessary for the service member holding the terminal apparatus to provide an optimal maintenance work to the user of the monitoring target apparatus, and therefore, it is possible to create a repair plan before the pump apparatus fails.

An information processing system according to the eighth aspect of the present invention, the information processing system according to the fifth or sixth aspect of the information processing system, wherein, in the enterprise storage apparatus, for each failure component, failure component identification information identifying the failure component and a work item for the failure component are stored in an associated manner, the terminal apparatus accepts an input of the failure component of the failed monitoring target apparatus, from an operator, and sends the failure component identification information identifying the accepted failure component, the enterprise information processing apparatus acquires the work item corresponding to the received failure component identification information by referring to the enterprise storage apparatus, extracts the state change characteristic of before the failure occurrence, from the state history information before the failure occurrence of the monitoring target apparatus, determines a discrimination condition for discriminating whether the extracted state change is normal, and sends the state change, the discrimination condition and the work item to the terminal apparatus, and the terminal apparatus receives the state change, the discrimination condition and the work item from the enterprise information processing apparatus, accumulates the state change, the discrimination condition and the work item in an associated manner, judges whether the accumulated state change for certain state history information satisfies the corresponding discrimination condition, when the terminal apparatus receives a certain state history information from a certain monitoring target apparatus, and displays the work item corresponding to a combination of the state change and the discrimination condition, when the discrimination condition is satisfied.

Thereby, when the state change satisfies the discrimination condition, the terminal apparatus can display a work item appropriate to a failure site corresponding to the state change, and therefore, the service member of the business operator, after looking at the display, can create a repair plan before the monitoring target apparatus fails.

An information processing system according to the ninth aspect of the present invention, the information processing system according to the eighth aspect of the information processing system, wherein the enterprise information processing apparatus extracts the state history information in which the extracted state change is found, from multiple pieces of the state history information about the same machine type that failed in the past, and determines the discrimination condition, using the extracted state history information.

Thereby, it is possible to enhance the prediction accuracy for the failure. Therefore, the service member holding the terminal apparatus can improve the validity of the schedule of the maintenance work, and therefore, can propose an optimal maintenance plan and/or budget plan to the user of the monitoring target apparatus.

An information processing method according to the tenth aspect of the present invention, the information processing method that refers to an enterprise storage apparatus, the enterprise storage apparatus accumulating machine-type identification information identifying a machine type of a monitoring target apparatus and normal-state history information in an associated manner, the normal-state history information being state history information when the machine type is in a normal state, the information processing method comprises: a step in which a terminal apparatus receives the machine-type identification information identifying the machine type of the monitoring target apparatus and the state history information indicating a history of a state of the monitoring target apparatus, from the monitoring target apparatus of a user by near field communication, and sends the received machine-type identification information and state history information; a step in which, when an enterprise information processing apparatus receives the machine-type identification information and state history information about a certain monitoring target apparatus from the terminal apparatus, the enterprise information processing apparatus compares the normal-state history information accumulated in the enterprise storage apparatus in association with the machine-type identification information and the received state history information, judges whether an operation state of the monitoring target apparatus is normal, and sends a judgment result to the terminal apparatus; and a step in which the terminal apparatus receives the judgment result from the enterprise information processing apparatus, and displays the received judgment result.

Thereby, the judgment result of whether the operation state of the monitoring target apparatus is normal is displayed on the terminal apparatus, and therefore, the service member to operate the terminal apparatus can check whether the operation state of the monitoring target apparatus is normal. According to the information processing method, the user does not need to subscribe a communication line, and therefore, it is possible to monitor the monitoring target apparatus that is an object of monitoring, without imposing the burden of connection fees for the communication line on the user.

An information processing apparatus according to the eleventh aspect of the present invention, the terminal apparatus that can refer to a storage apparatus, the storage apparatus accumulating machine-type identification information identifying a machine type of a monitoring target apparatus and normal-state history information in an associated manner, the normal-state history information being state history information when the machine type is in a normal state, the terminal apparatus comprises: a communication unit that receives the machine-type identification information identifying the machine type of the monitoring target apparatus and the state history information indicating a history of a state of the monitoring target apparatus, from the monitoring target apparatus of a user by near field communication; a processor that, in the case of receiving the machine-type identification information and state history information about a certain monitoring target apparatus from the monitoring target apparatus, compares the normal-state history information accumulated in the storage apparatus in association with the machine-type identification information and the received state history information, and judges whether an operation state of the monitoring target apparatus is normal; and
a display unit that displays a judgment result obtained by the judgment of the processor.

Thereby, the judgment result of whether the operation state of the monitoring target apparatus is normal is displayed on the terminal apparatus, and therefore, the service member to operate the terminal apparatus can check whether the operation state of the monitoring target apparatus is normal. According to the information processing apparatus, the user does not need to subscribe a communication line, and therefore, it is possible to monitor the monitoring target apparatus that is an object of monitoring, without imposing the burden of connection fees for the communication line on the user.

A terminal apparatus according to the twelfth aspect of the present invention, a terminal apparatus that can refer to a storage apparatus, the storage apparatus accumulating machine-type identification information identifying a machine type of a monitoring target apparatus and normal-state history information in an associated manner, the normal-state history information being state history information when the machine type is in a normal state, the terminal apparatus comprises: a communication unit that receives the machine-type identification information identifying the machine type of the monitoring target apparatus and the state history information indicating a history of a state of the monitoring target apparatus, from the monitoring target apparatus of a user by near field communication; a processor that, in the case of receiving the machine-type identification information and state history information about a certain monitoring target apparatus from the monitoring target apparatus, compares the normal-state history information accumulated in the storage apparatus in association with the machine-type identification information and the received state history information, and judges whether an operation state of the monitoring target apparatus is normal; and a display unit that displays a judgment result obtained by the judgment of the processor.

Thereby, the judgment result of whether the operation state of the monitoring target apparatus is normal is displayed on the terminal apparatus, and therefore, the service member to operate the terminal apparatus can check whether the operation state of the monitoring target apparatus is normal. According to one aspect of the present invention, the user does not need to subscribe a communication line, and therefore, it is possible to monitor the monitoring target apparatus that is an object of monitoring, without imposing the burden of connection fees for the communication line on the user.

A water supply apparatus according to one aspect of the present invention, the water supply apparatus that supplies water to a water supply object, the water supply apparatus comprises: at least one pump that transfers the water; and a control unit that controls the pump, wherein the control unit includes a nonvolatile memory, an input unit to which operation information about an operation state of the pump is input, and a communication unit configured to communicate display information with the exterior, the display information being displayed on an external display device, apparatus information is stored in the nonvolatile memory, the apparatus information containing at least one of the number of the pumps, a water supply system, and machine-type identification information indicating a configuration of the water supply apparatus, and the control unit sets the display information based on the apparatus information stored in the nonvolatile memory and the operation information input to the input unit, and communicates the display information with the exterior through the communication unit.

By such a configuration, the water supply apparatus according to one aspect of the present invention sets the display information based on the apparatus information stored in the nonvolatile memory. Thereby, it is possible to communicate the display information having a high versatility, to the external display device. Then, the external display device, after receiving the display information from the water supply apparatus, can display the display information using a software program having a high versatility, without a dedicated software program for each apparatus information.

Further, the display information may contain information about each operation state of a predetermined number of pumps. And the control unit may set the display information based on the operation information input to the input unit, for pumps that are of the predetermined number of pumps and that are recognized based on the apparatus information, and set the display information to information indicating nonexistence of pumps, for the remaining pumps.

Thereby, even when there is a difference in the number of pumps of the water supply apparatus, it is possible to send the display information having a high versatility, to the exterior.

Further, when the water supply system is recognized based on the apparatus information and a suction port of the pump is directly connected with a water main, the control unit may set a suction-side pressure of the pump as the display information, based on the operation information input to the input unit.

Thereby, without checking the setting of the water supply system, it is possible to recognize the direct coupled water supply by recognizing the existence or nonexistence of the display of the suction-side pressure.

Further, it is allowed that the apparatus information does not contain the machine-type identification information. The control unit may discriminate the machine-type identification information based on the apparatus information stored in the nonvolatile memory, and set the discriminated machine-type identification information as the display information.

In this case, it is possible to display the machine-type identification information on the external display device based on the apparatus information stored in the nonvolatile memory.

Further, the display information contains at least one of an operation/stop state of the pump, a rotation speed of the pump, an integrated operation time of the pump, the number of times of operation of the pump, a discharge-side pressure of the pump, a suction-side pressure of the pump, and setting information that set by a user and that is used for controlling the pump.

Further, the control unit may include a memory separately from the nonvolatile memory, and stores, in the memory, the apparatus information stored in the nonvolatile memory, at the time of activation of the water supply apparatus.

Further, the communication unit may directly send the display information to the external display device, or sends the display information to a remote monitoring device to send the display information to the external display device through the remote monitoring device.

Further, the water supply apparatus further may comprise a display unit that displays at least a part of the operation information.

Further, the communication unit may be a control-unit-side antenna unit that receives a radio wave from the external display device and that converts the received radio wave into electric power.

Further, the communication unit may send the display information to the exterior by near field communication (NFC)

A control method for a water supply apparatus according to one aspect of the present invention comprises: a step of storing apparatus information in a nonvolatile memory included in the water supply apparatus, the apparatus information containing at least one of the number of pumps of the water supply apparatus, a water supply system, and machine-type identification information of the water supply apparatus; a step of setting display information for displaying on an external display device based on the apparatus information stored in the nonvolatile memory and operation information about an operation state of the pump; and a step of sending the set display information from the water supply apparatus to the exterior.

By such a configuration, the control method for the water supply apparatus according to one aspect of the present invention can exert the same effect as the above control apparatus according to one aspect of the present invention.

A water supply apparatus according to one aspect of the present invention, the water supply apparatus that supplies water to a water supply object, the water supply apparatus comprises: at least one pump that transfers the water; and a control unit that controls the pump, wherein the control unit includes a rewritable nonvolatile memory and a communication unit configured to communicate with an external display device, apparatus information and setting information are stored in the nonvolatile memory, the apparatus information containing at least one of the number of the pumps, a water supply system, and machine-type identification information indicating a configuration of the water supply apparatus, the setting information being set by a user and being used for controlling the pump, and the control unit sets a changeable range of the setting information based on the apparatus information stored in the nonvolatile memory, and when the control unit receives a change command for the setting information from the external display device, the control unit changes the setting information stored in the nonvolatile memory when a change in the setting information by the change command is in the changeable range, and does not change the setting information stored in the nonvolatile memory when the change in the setting information by the change command is beyond the changeable range.

By such a configuration, the water supply apparatus in the present invention can set the changeable range corresponding to the apparatus information. Then, in the case of receiving the change command for the setting information from the external display device, whether to change the setting information stored in the nonvolatile memory is judged based on the changeable range. Therefore, it is possible to change the setting information in the changeable range corresponding to the apparatus information, and it is possible to change the setting information by the external display device, and to prevent the malfunction of the water supply apparatus due to an unintended change in the setting information.

Further, the control unit may change the setting information stored in the nonvolatile memory, when quantity of water to be discharged from the pump is smaller than a predetermined quantity.

Thereby, it is possible to prevent the operation state of the pump from being suddenly changed due to the change in the setting information during the operation of the pump.

Further, the setting information may contain change restriction information indicating a restriction of the change in the setting information. And when the change restriction information indicates prohibition of the change in the setting information, the control unit may not change the setting information stored in the nonvolatile memory, even when receiving the change command.

Thereby, by setting the change restriction information, it is possible to permit or prohibit the change in the setting information by the external display device, and it is possible to prevent an unintended change in the setting information.

Further, the control unit may not change the setting information stored in the nonvolatile memory, when the change command does not comply with a predetermined encoding rule.

Thereby, it is possible to enhance the reliability of the communication between the external display device and the water supply apparatus.

Further, when the control unit changes the setting information stored in the nonvolatile memory based on the change command, the control unit may store a time of the change in the setting information or a time of the receiving of the change command, in the nonvolatile memory.

Thereby, when the setting information is changed, the time is stored. Therefore, it is possible to check the situation when the setting information was changed last time.

Further, when the control unit receives the change command and does not change the setting information stored in the nonvolatile memory, the control unit may give a notice.

Thereby, the user operating the external display device can recognize that the setting information has not been changed even though the user sent the change command.

Further, the control unit may comprise a main board for controlling the pump, and a communication board on which the communication unit and the nonvolatile memory are provided. Further, a memory may be provided on the main board, separately from the nonvolatile memory. And the control unit may store, in the memory, the apparatus information stored in the nonvolatile memory, at the time of activation of the water supply apparatus.

Further, the water supply apparatus may further comprise a display unit that displays information about the control of the pump.

Further, the communication unit may send information about the control of the pump, to the external display device.

Further, the communication unit may be a control-unit-side antenna unit that receives a radio wave from the external display device and that converts the received radio wave into electric power.

Further, the communication unit may communicate with the external display device by near field communication (NFC).

A control method for a water supply apparatus according to one aspect of the present invention, the control method for a water supply apparatus that supplies water to a water supply object, the control method comprises: a step of storing apparatus information and setting information in a nonvolatile memory included in the water supply apparatus, the apparatus information containing at least one of the number of pumps of the water supply apparatus, a water supply system, and machine-type identification information of the water supply apparatus, the setting information being set by a user and being used for controlling the pump; a step of setting a changeable range of the setting information based on the apparatus information stored in the nonvolatile memory; and a step of, when receiving a change command for the setting information from an external display device, changing the setting information stored in the nonvolatile memory when a change in the setting information by the change command is in the changeable range, and not changing the setting information stored in the nonvolatile memory when the change in the setting information by the change command is beyond the changeable range.

By such a configuration, the control method for the water supply apparatus in the present invention can exert the same effect as the above water supply apparatus according to one aspect of the present invention.

### Advantageous Effects of Invention

According to one aspect of the present invention, the judgment result of whether the operation state of the monitoring target apparatus is normal is displayed on the terminal apparatus, and therefore, a service member to operate the terminal apparatus can check whether the operation state of the monitoring target apparatus is normal. According to the information processing system, the user does not need to subscribe a communication line, and therefore, it is possible to monitor the monitoring target apparatus that is an object of monitoring, without imposing the burden of connection fees for the communication line on the user.

### Brief Description of Drawings

Fig. 1 is a schematic diagram showing an aspect of the use of an information processing system S according to the first embodiment.
Fig. 2 is a schematic block diagram showing the configuration of the information processing system S according to the first embodiment.
Fig. 3 is a schematic block diagram showing an example of the configuration of the pump apparatus P according to the first embodiment.
Fig. 4 is a schematic block diagram showing an example of the configuration of the terminal apparatus 1 according to the first embodiment.
Fig. 5 is an example of judgment items, judgment conditions and recommendation/guidance items for the terminal apparatus 1.
Fig. 6 is a flowchart showing an example of the process in the terminal apparatus 1.
Fig. 7 is a schematic block diagram showing an example of the configuration of the information processing apparatus 2 according to the first embodiment.
Fig. 8(A) is a graph showing an example of the time series change in the operation state of the pump 102 at the normal time.
Fig. 8(B) is a diagram showing an example of the time series change in the operation state of the pump 102 at an abnormal time.
Fig. 9(A) is a graph showing an example of the time series change in the number of activation times of the pump per unit time at the normal time.
Fig. 9(B) is a graph showing an example of the time series change in the number of activation times of the pump per unit time at an abnormal time.
Fig. 10(A) is a graph showing a first example of the time series change in the motor temperature at the normal time.
Fig. 10(B) is a graph showing a first example of the time series change in the motor temperature at an abnormal time.
Fig. 11(A) is a graph showing a second example of the time series change in the motor temperature at the normal time.
Fig. 11(B) is a graph showing a second example of the time series change in the motor temperature at an abnormal time.
Fig. 12 is a flowchart showing an example of the process in the information processing apparatus 2.
Fig. 13 is a plan view of an exemplary water supply apparatus according to the second embodiment.
Fig. 14 is a front view of an exemplary water supply apparatus according to the second embodiment.
Fig. 15 is a left-side view of an exemplary water supply apparatus according to the second embodiment.
Fig. 16 is a schematic block diagram showing an example of the control unit.
Fig. 17 is a flowchart showing an exemplary display data setting process that is executed by the control unit.
Fig. 18 is a diagram showing an example of the data stored in the nonvolatile memory, the data stored in the control memory and the data stored in the communication memory shortly after the power of the water supply apparatus 10 is turned on.
Fig. 19 is a diagram showing an example of the data stored in the nonvolatile memory, the data stored in the control memory and the data stored in the communication memory when the processes of steps S100 in Fig. 17 is executed.
Fig. 20 is a diagram showing an example of the data stored in the nonvolatile memory, the data stored in the control memory and the data stored in the communication memory when the processes of steps S110 in Fig. 17 is executed.
Fig. 21 is a diagram showing an example of the data stored in the nonvolatile memory, the data stored in the control memory and the data stored in the communication memory when the processes of steps S120 in Fig. 17 is executed.
Fig. 22 is a diagram showing a control unit and an external display device in a modification.
Fig. 23 is a plan view of an exemplary water supply apparatus according to the third embodiment.
Fig. 24 is a front view of an exemplary water supply apparatus according to the third embodiment.
Fig. 25 is a left-side view of an exemplary water supply apparatus according to the third embodiment.
Fig. 26 is a schematic block diagram showing an example of the control unit.
Fig. 27 is a flowchart showing an exemplary setting information change process that is executed by the control unit.
Fig. 28 is a diagram showing a control unit and an external display device in a modification.

### Description of Embodiments

### <First Embodiment>

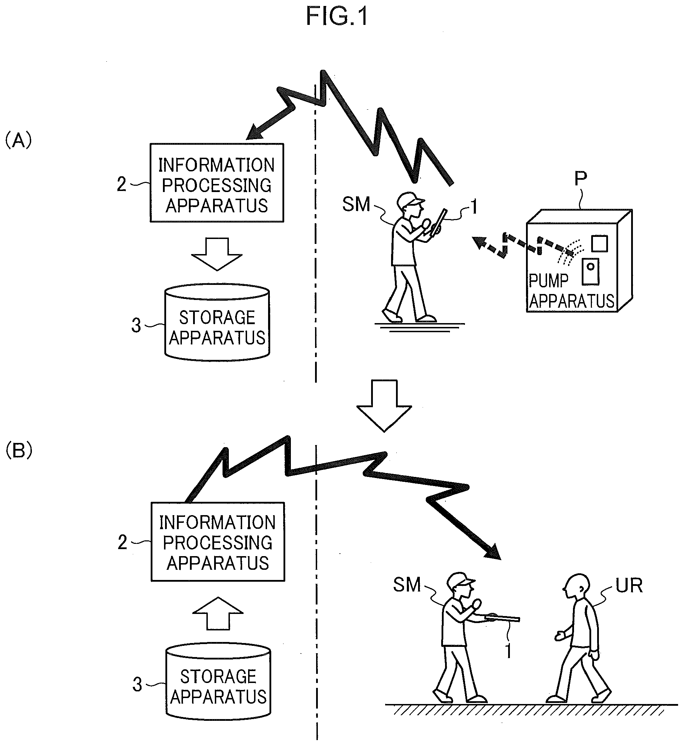

Hereinafter, a first embodiment will be described with reference to the drawings. The first embodiment will be described hereinafter, assuming that a monitoring target apparatus that is an object of monitoring is a pump apparatus P, as an example. Fig. 1 is a schematic diagram showing an aspect of the use of an information processing system S according to the first embodiment. Fig. 1(A) is a schematic diagram for describing that state history information is retrieved by a terminal apparatus 1 of a service member SM and is analyzed by an information processing apparatus (enterprise information processing apparatus) 2 that is at a remote location. Here, in the first embodiment, the description will be made assuming that the terminal apparatus 1 is held by the service member SM, as an example, but the terminal apparatus 1 may be held by a user UR. Thus, the terminal apparatus 1 is sometimes used by the service member SM, and is sometimes used by the user UR.

The pump apparatus P to be used by the user UR includes a wireless communication module for a near field communication. In the first embodiment, the description will be made hereinafter, assuming that the near field communication is Wi-Fi (R) (hereinafter, referred to as wireless LAN), as an example. The pump apparatus P accumulates the state history information indicating the history of the state of the pump apparatus P, in a storage medium (herein, an internal memory as an example), at a predetermined time interval. Incidentally, the state history information may be accumulated in an external storage medium, instead of the internal memory.

As shown in Fig. 1(A), the pump apparatus P sends, through the wireless LAN, machine-type identification information identifying the machine type of the pump apparatus P and the state history information indicating the history of the state of the pump apparatus P, to the terminal apparatus 1 to be used by the service member SM who performs maintenance checkup. The state history information contains operation-state history information indicating the history of the operation state (for example, operation, stop and the like) of the pump apparatus P, and measurement-value history information indicating the history of a measurement value (for example, pump pressure, pump surface temperature, motor input current, motor power, motor temperature and/or temperature in a control panel) measured by a measuring instrument that is provided in the pump apparatus P. The state history information, for example, may be the history information after the last visit for maintenance checkup by the service member SM and before the present visit, or may be the history information in a period having a previously determined length (for example, the last six months). Here, the pump apparatus P sends the above-described information to the terminal apparatus 1 held by the service member SM, but without being limited to this, may send the information to a terminal apparatus held by the user UR.

The terminal apparatus 1 receives the machine-type identification information and the state history information from the pump apparatus P of the user UR through the wireless LAN, and sends the received machine-type identification information and state history information to an information processing apparatus 2 through a mobile phone line network.

The information processing apparatus 2 receives the state history information from the terminal apparatus 1, and analyzes the state of the pump apparatus P, using the received state history information. Thus, the retrieved state history information is instantly analyzed. In the case of judging that the pump apparatus P is normal as a result of the analysis, the information processing apparatus 2 stores the received state history information in a storage apparatus (enterprise storage apparatus) 3 in association with the machine-type identification information, as normal-state history information that is the state history information when the machine type is in a normal state. Thereby, the normal-state history information is accumulated in the storage apparatus 3, for each machine type.

Fig. 1(B) is a schematic diagram showing that the service member SM explains the analysis result while displaying the analysis result on the terminal apparatus 1. As shown in Fig. 1(B), the information processing apparatus 2 sends the analysis result to the terminal apparatus 1 through the mobile phone line network. The terminal apparatus 1 receives the analysis result from the information processing apparatus 2, and displays the received analysis result. The analysis result, for example, is the information about the recommendation or guidance of the overhaul of a pump unit, the recommendation or guidance of the overhaul of a peripheral part of the pump, the recommendation or guidance of bearing replacement, the recommendation or guidance of the overhaul of the periphery of a pipe, and the like. The service member SM can perform the report of the state of the pump apparatus P and the proposition of checkup, fixing or component replacement for the user UR of the pump apparatus P, on the spot, while referring to the analysis result displayed on the terminal apparatus 1 and showing the analysis result to the user UR, for example. Incidentally, in Fig. 1(B), the information processing apparatus 2 sends the analysis result to the terminal apparatus 1 held by the service member SM, but without being limited to this, may directly send the analysis result to the terminal apparatus held by the user UR.

Thus, when the service member SM, for maintenance checkup, goes to a site where the pump apparatus P is installed, the state history information of the pump apparatus P is retrieved by the terminal apparatus 1 and is instantly analyzed by the information processing apparatus 2, and the analysis result is displayed on the terminal apparatus 1, on the site. Thereby, when the service member SM, for maintenance checkup, goes to a site where the pump apparatus P is installed, the service member SM can perform the report of the state of the pump apparatus P and the proposition of fixing or component replacement for the user UR of the pump apparatus P, on the spot, while referring to the analysis result displayed on the terminal apparatus 1 with the user UR.

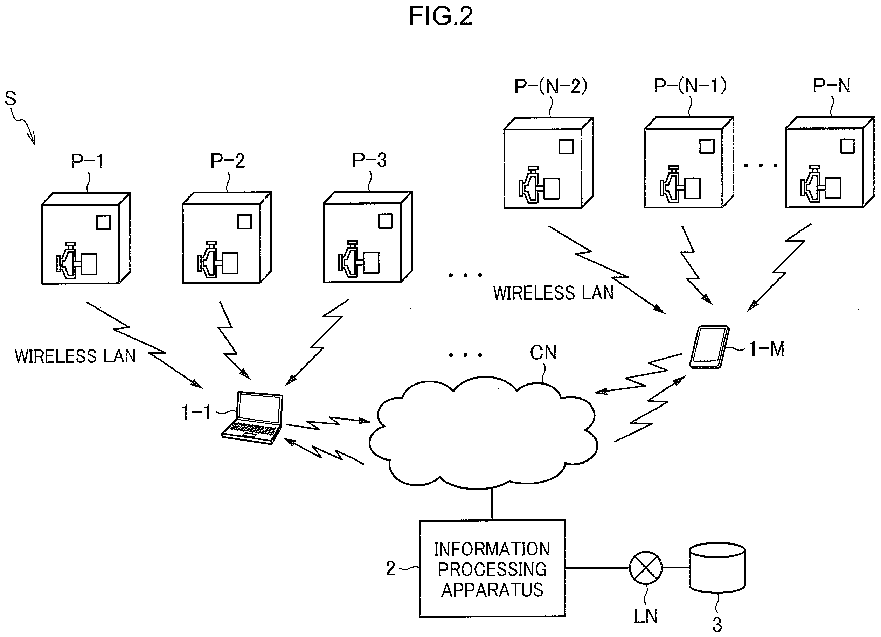

Next, the configuration of an information processing system S according to the first embodiment will be described with use of Fig. 2. Fig. 2 is a schematic block diagram showing the configuration of the information processing system S according to the first embodiment. As shown in Fig. 2, the information processing system S includes pump apparatuses P-1, P-2, P-3, ..., P-(N-2), P-(N-1), P-N (N is a positive integer), terminal apparatuses 1-1, ..., 1-M (M is a positive integer), the information processing apparatus 2, and the storage apparatus 3. The pump apparatuses P-1, P-2, P-3 and the terminal apparatus 1-1 can communicate with each other by a wireless LAN. The pump apparatuses P-(N-2), P-(N-1), P-N and the terminal apparatus 1-M can communicate with each other by a wireless LAN. The terminal apparatuses 1-1, ..., 1-M are connected with the information processing apparatus 2 through a mobile phone line network CN. The information processing apparatus 2 is connected with the storage apparatus 3 through a local network LN. Each of the terminal apparatuses 1-1, ..., 1-M, for example, is any one of a mobile phone, a tablet terminal, a notebook computer and the like. The information processing apparatus 2 is a server, for example. Here, the mobile phone line network CN includes base stations and the like, the terminal apparatuses 1-1, ..., 1-M perform wireless communication in accordance with a wireless communication standard for base stations and mobile phones, and the base stations relay information. The detail is omitted.

Hereinafter, the pump apparatuses P-1, P-2, P-3, ..., P-(N-2), P-(N-1), P-N are collectively referred to as the pump apparatus P. Further, the terminal apparatuses 1-1, ..., 1-M are collectively referred to as the terminal apparatus 1.

Next, a basic operation of the information processing system having the above configuration will be described.

The terminal apparatus 1 receives the machine-type identification information identifying the machine type of the pump apparatus P and the state history information indicating the history of the state of the pump apparatus P, from the pump apparatus P that is a monitoring target apparatus of the user, by a near field communication (in the first embodiment, a wireless LAN as an example), and sends the received machine-type identification information and state history information.

The information processing apparatus 2 receives the machine-type identification information and the state history information from the terminal apparatus 1.

The storage apparatus 3 accumulates the machine-type identification information identifying the machine type of the monitoring target apparatus and the normal-state history information that is the state history information when the machine type is in the normal state, in an associated manner.

In the case of receiving the machine-type identification information and state history information about a certain pump apparatus P from the terminal apparatus 1, the information processing apparatus 2 compares the normal-state history information accumulated in the storage apparatus in association with the machine-type identification information and the received state history information, judges whether the operation state of the pump apparatus P is normal, and sends the judgment result to the terminal apparatus 1. In the case of judging that the operation state of the pump apparatus P is normal, the information processing apparatus 2 stores the state history information in the storage apparatus 3, as the normal-state history information, in association with the machine-type identification information.

The terminal apparatus 1 receives the judgment result from the information processing apparatus 2, and displays the received judgment result.

Thereby, the judgment result of whether the operation state of the pump apparatus P is normal is displayed on the terminal apparatus 1, and therefore, the service member to operate the terminal apparatus 1 can check whether the operation state of the pump apparatus P is normal. According to the information processing system S, the user does not need to subscribe to a communication line, and therefore, it is possible to monitor the monitoring target apparatus that is an object of monitoring, without imposing the burden of connection fees for the communication line on the user. Further, in the case where it is judged that the operation state of the pump apparatus P is normal, the state history information is stored in the storage apparatus 3, as the normal-state history information, in association with the machine-type identification information, and therefore, the state history information when the operation state is normal is accumulated for each machine type. Thereby, when the judgment for the same machine type is performed next time, it is possible to compare the state history information to the many pieces of the accumulated normal-state history information, and therefore, it is possible to enhance the judgment accuracy.

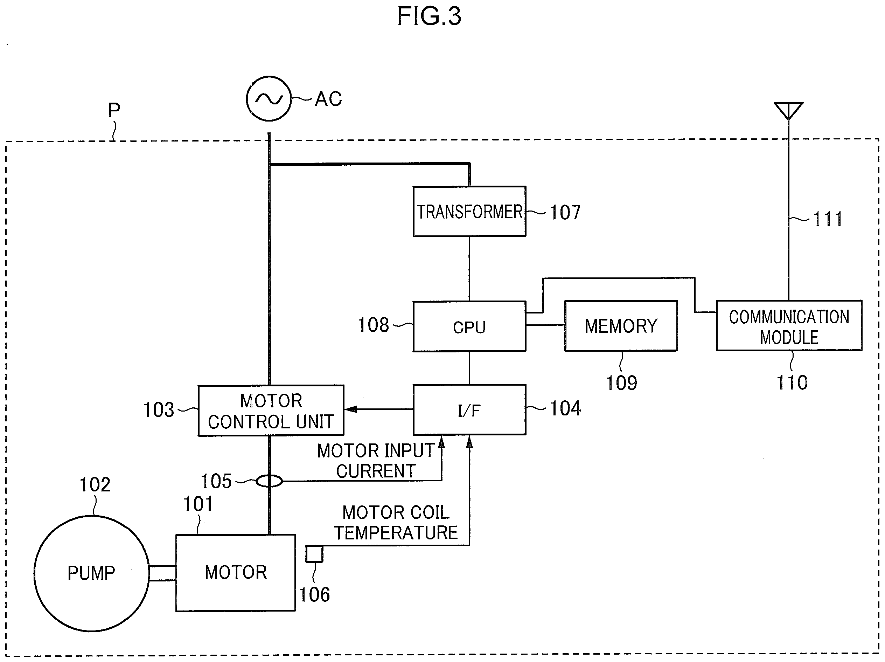

Next, the configuration of the pump apparatus P according to the first embodiment will be described with use of the Fig. 3. Fig. 3 is a schematic block diagram showing an example of the configuration of the pump apparatus P according to the first embodiment. As shown in Fig. 3, the pump apparatus P includes a motor 101, a pump 102 coupled to a rotary shaft of the motor 101, a motor control unit 103 connected with the motor 101 and connected with a commercial power source AC.

The motor control unit 103 converts the alternating-current voltage from the commercial power source AC, into an alternating-current voltage having a desired frequency and a desired amplitude, and supplies the alternating-current voltage after the conversion, to the motor 101. By the alternating-current voltage, the motor 101 rotates the rotary shaft. Thereby, the pump 102 coupled to the rotary shaft is driven so that water is pumped up.

Furthermore, the pump apparatus P includes an interface (I/F) 104 connected with the motor control unit 103, a current measuring instrument 105 connected with the interface (I/F) 104, and a temperature measuring instrument (temperature sensor) 106 connected with the interface (I/F) 104. The current measuring instrument 105 is, for example, a CT (Current Transformer), measures motor input current, and outputs a signal indicating a measurement value after the measurement, to the interface (I/F) 104. Similarly, the temperature measuring instrument 106 measures the temperature of the motor 101 (for example, the temperature of a coil of the motor 101), and outputs a signal indicating a measurement value after the measurement, to the interface (I/F) 104.

Furthermore, the pump apparatus P includes a transformer 107 connected with the commercial power source AC, and a CPU 108 connected with the transformer 107 and the interface (I/F) 104. The transformer 107 is, for example, a two-winding transformer, converts the voltage of the commercial power source AC into a desired voltage, and outputs the voltage after the conversion, to the CPU 108. Thereby, the CPU 108 is driven by the voltage supplied from the transformer 107.

Furthermore, the pump apparatus P includes a memory 109 connected with the CPU 108, a communication module 110 connected with the CPU 108, and an antenna 111 connected with the communication module 110. In the memory 109, information is temporarily stored. For example, the CPU 108, as needed, stores the operation state (for example, operation, stop and the like) of the pump apparatus P (specifically, the pump 102) in the memory 109. Thereby, the operation state history information indicating the history of the operation state of the pump apparatus P is accumulated in the memory 109. Further, for example, the CPU 108, as needed, stores measurement values of the motor input current, the motor coil temperature and the like, in the memory 109. Thereby, the measurement-value history information indicating the history of the measurement values is accumulated in the memory 109. Further, during operation, the CPU 108 updates an operation integration time in the memory 109. Thereby, the operation integration time is stored in the memory 109. Further, the CPU 108 updates the number of activation times of the pump 102 that is stored in the memory 109, whenever the pump 102 is activated, and/or updates the number of stop times of the pump 102 that is stored in the memory 109, whenever the pump 102 is stopped. Thereby, the number of activation times and/or the number of stop times of the pump 102 are stored in the memory 109.

The communication module 110 is, for example, a communication module for the wireless LAN, and sends a signal containing the state history information accumulated in the memory 109, from the antenna 111, in accordance with a command from the CPU 108. Thereby, the state history information is sent to the terminal apparatus 1. Here, the state history information contains the operation-state history information, the measurement-value history information, the operation integration time, and the number of activation times and/or the number of stop times of the pump 102.

In addition, the pump apparatus P is provided with measuring instruments that measure the pump pressure, the pump surface temperature, the motor electric power, and the temperature in the motor control unit 103 (hereinafter, referred to as panel temperature), respectively. The descriptions are omitted.

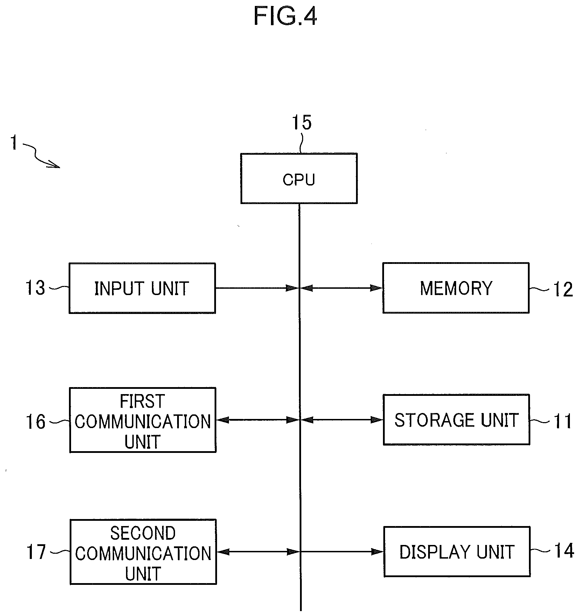

Fig. 4 is a schematic block diagram showing an example of the configuration of the terminal apparatus 1 according to the first embodiment. As shown in Fig. 4, the terminal apparatus 1 includes a storage unit 11, a memory 12, an input unit 13, a display unit 14, a CPU (Central Processing Unit) 15, a first communication unit 16, and a second communication unit 17. These constituents are connected with each other by a bus.

In the storage unit 11, a program to be read and executed by the CPU 15 is stored.

In the memory 12, information is temporarily stored.

The input unit 13 accepts an input from the service member, and outputs an input signal indicating the accepted input, to the CPU 15. The input unit 13 may be a touch panel that is integrated with the display unit 14.

The display unit 14 displays information in accordance with a command from the CPU 15.

The CPU 15 is an exemplary processor, and functions as a processing unit by reading and executing the program stored in the storage unit 11.

The first communication unit 16 is, for example, a wireless communication module for the wireless LAN, and communicates with the pump apparatus P through the wireless LAN. For example, the first communication unit 16 receives a signal sent from the pump apparatus P through the wireless LAN, performs the demodulation and composition of the received signal, and outputs the obtained signal to the CPU 15. Thereby, the CPU 15 can acquire the state history information of the pump apparatus P.

The second communication unit 17 is a wireless communication module for the mobile phone line network CN, and communicates with the information processing apparatus 2. For example, the second communication unit 17, in accordance with a command from the CPU 15, sends a signal containing the state history information, to the information processing apparatus 2, using the wireless communication for mobile phones.

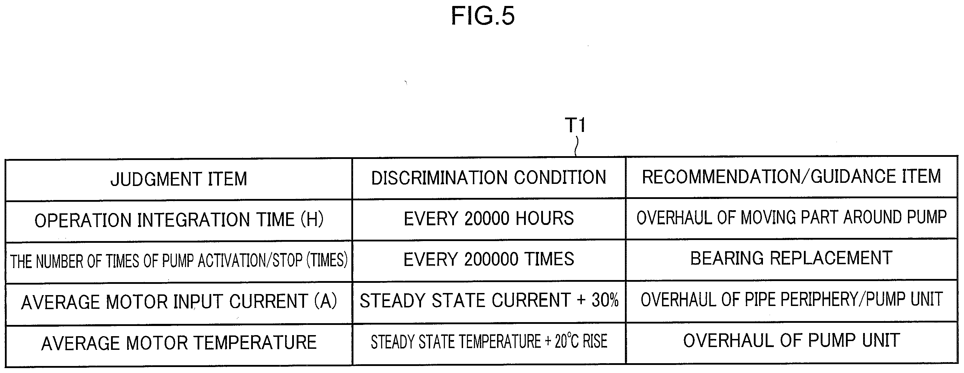

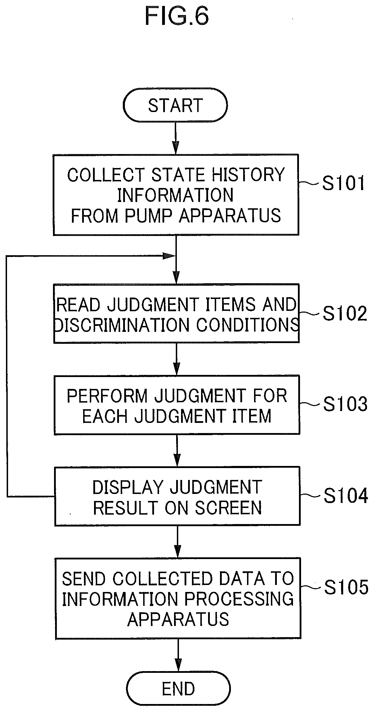

An operation of the terminal apparatus 1 having the above configuration will be described with reference to Fig. 5 and with use of Fig. 6. Fig. 5 is an example of judgment items, judgment conditions and recommendation items or guidance items for the terminal apparatus 1. As shown in Fig. 5, a table T1 associated with the judgment items, the judgment conditions and the recommendation items or guidance items (work items) is stored in the storage unit 11. Fig. 6 is a flowchart showing an example of the process in the terminal apparatus 1. As the premise, it is assumed that the service member holding the terminal apparatus 1 visits at a place where the pump apparatus P is installed.

(Step S101) First, the CPU 15 collects the machine-type identification information identifying the machine type of the pump apparatus P and the state history information indicating the history of the state of the pump apparatus P, from the pump apparatus P through the wireless LAN.

(Step S102) Next, the CPU 15 reads the judgment items and the judgment conditions from the storage unit 11.

(Step S103) Next, the CPU 15 judges whether the judgment condition is satisfied, for each judgment item.

(Step S104) Next, in the case where the judgment condition is satisfied for each judgment item, the CPU 15, for example, displays the work item associated with the judgment item, on the display unit 14.

For example, as shown in Fig. 5, using the operation integration time acquired from the pump apparatus P, the CPU 15 displays the overhaul of a moving part around the pump as the work item on the display unit 14, whenever the operation integration time of the pump 102 becomes, for example, 20000 hours.

Further, as shown in Fig. 5, using the number of activation times or the number of stop times of the pump that is acquired from the pump apparatus P, the CPU 15 displays the bearing replacement as the work item on the display unit 14, when the number of activation times or the number of stop times of the pump becomes, for example, 200000 times.

Further, as shown in Fig. 5, the CPU 15 calculates the latest average motor input current, from the latest history of the motor input current that is acquired from the pump apparatus P. Further, the CPU 15 calculates the average motor input current in the steady state, from the past history of the motor input current that is stored in the storage apparatus 3. For example, in the case where the latest average motor input current is higher by 30% or more relative to the average motor input current in the steady state, the CPU 15 displays the overhaul of the pipe periphery and the pump unit as the work item, on the display unit 14.

Further, as shown in Fig. 5, the CPU 15 calculates the latest average motor temperature, from the latest history of the motor temperature that is acquired from the pump apparatus P. Further, the CPU 15 calculates the average motor temperature in the steady state, from the past history of the motor temperature that is stored in the storage apparatus 3. For example, in the case where the latest average motor temperature is higher by 20% or more relative to the average motor temperature in the steady state, the CPU 15 displays the overhaul of the pump unit as the work item, on the display unit 14.

Thereby, the work items are displayed on the display unit 14, and therefore, the service member at the place where the pump apparatus P is installed can fully carry out the work items.

(Step S105) Next, the CPU 15 sends the collected data, that is, the machine-type identification information and the state history information, to the information processing apparatus 2.

As described above, the terminal apparatus 1 according to the first embodiment includes the storage unit 11 in which the judgment items, the discrimination conditions for the judgment items and the work items when the discrimination conditions are satisfied are stored in an associated manner. Furthermore, the terminal apparatus 1 includes the first communication unit 16 that receives, from the monitoring target apparatus, the state history information indicating the history of the state of the monitoring target apparatus, by near field communication. Furthermore, the terminal apparatus 1 includes the display unit that displays information. Furthermore, the terminal apparatus 1 includes the processor that judges whether the state history information satisfies the discrimination condition for each judgment item, by referring to the storage unit 11, when the first communication unit 16 receives certain state history information, and displays the work item associated with the discrimination condition in the storage unit 11, on the display unit 14, when the discrimination condition is satisfied.

Thereby, the work items are displayed on the display unit 14, and therefore, the on-site service member, after looking at the display, can fully carry out the work items.

Incidentally, in the storage unit 11, tools and/or consumable parts to be used for work by the on-site service member, and/or work contents (for example, a specific work content for bearing replacement) may be further stored in association with the judgment items. Then, the CPU 15 may display, on the display unit 14, not only the work items but also the tools and/or consumable parts to be used for work by the on-site service member and/or the work contents. Thereby, the on-site service member can understand the work contents with no error in judgment.

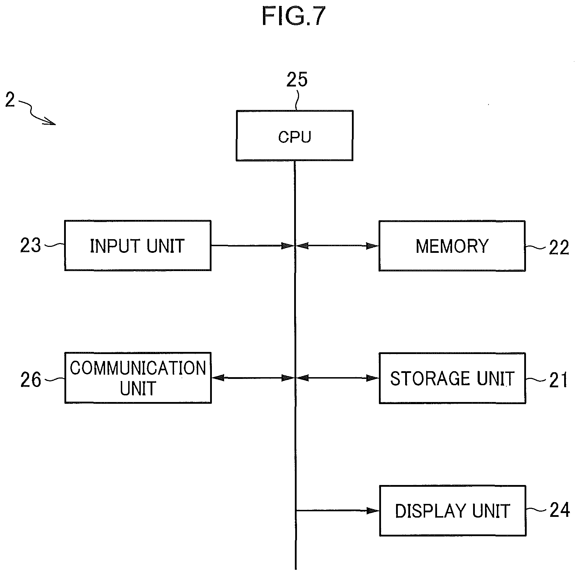

Fig. 7 is a schematic block diagram showing an example of the configuration of the information processing apparatus 2 according to the first embodiment. As shown in Fig. 7, the information processing apparatus 2 includes a storage unit 21, a memory 22, an input unit 23, a display unit 24, a CPU 25, and a communication unit 26. These constituents are connected with each other by a bus.

In the storage unit 21, a program to be read and executed by the CPU 25 is stored.

In the memory 22, information is temporarily stored.

The input unit 23 accepts an input from an operator of the information processing apparatus 2, and outputs an input signal indicating the accepted input, to the CPU 25.

The display unit 24 displays information in accordance with a command from the CPU 25.

The CPU 25 is an exemplary processor, and functions as a processing unit by reading and executing the program stored in the storage unit 21.

The communication unit 26 is a communication module for the mobile phone line network CN, and communicates with the terminal apparatus 1. For example, the communication unit 26 receives a signal containing the state history information.

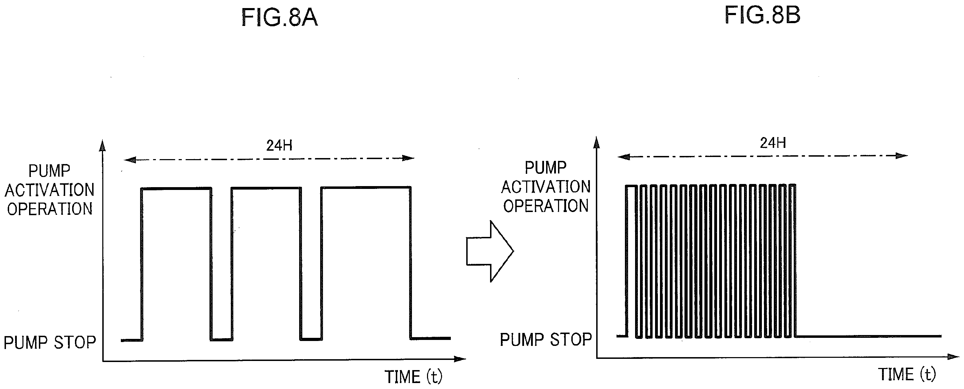

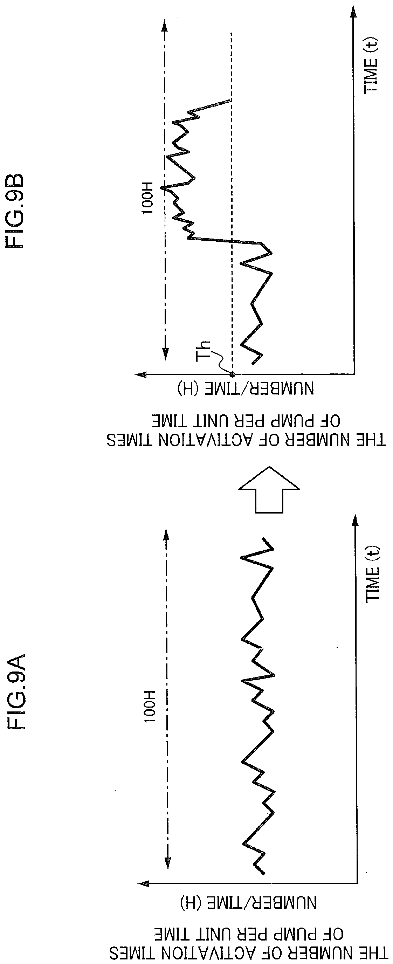

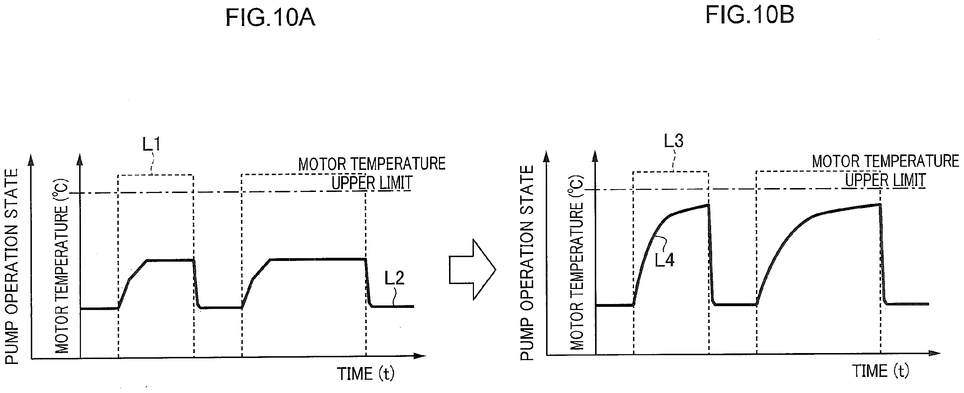

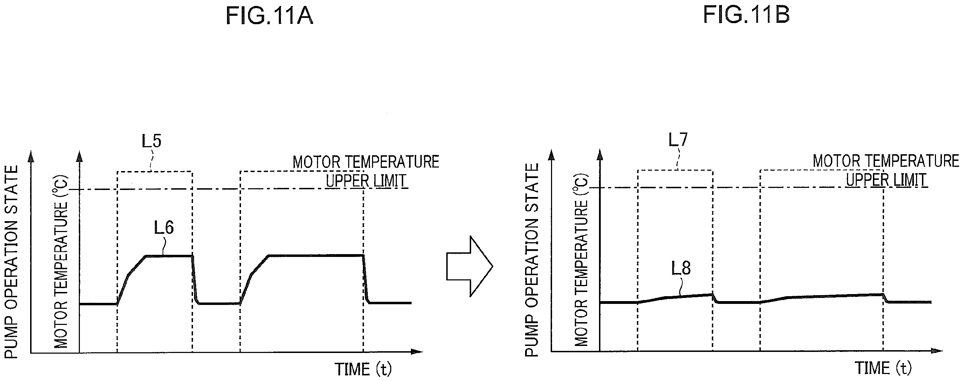

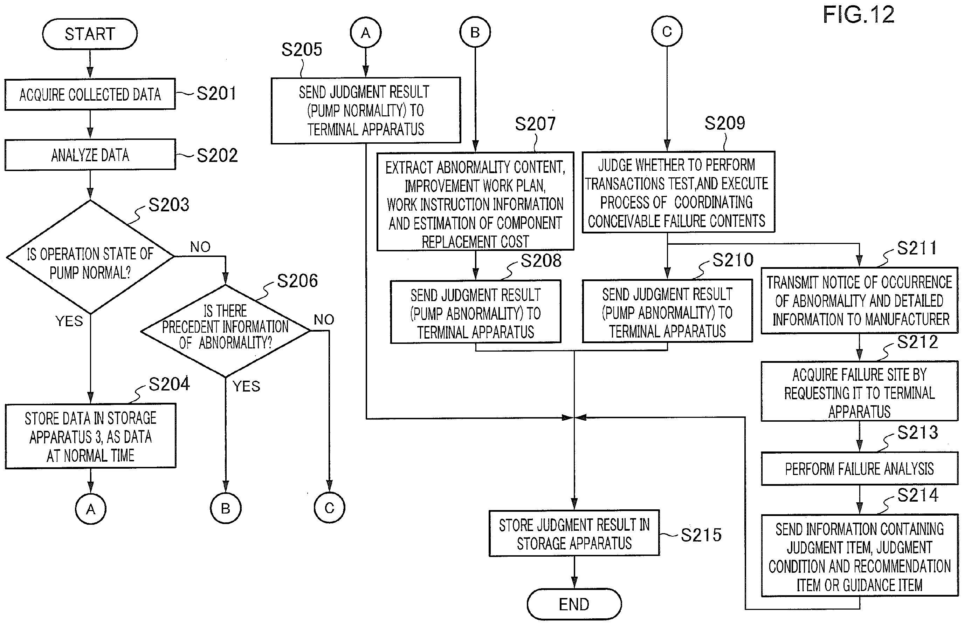

An operation of the information processing apparatus 2 having the above configuration will be described with reference to Figs. 8 to 11 and with use of Fig. 12. Fig. 8 shows a first example of the case of judging that the pump is abnormal. Fig. 8(A) is a graph showing an example of the time series change in the operation state of the pump 102 at the normal time. Fig. 8(B) is a diagram showing an example of the time series change in the operation state of the pump 102 at an abnormal time. Fig. 9 shows a second example of the case of judging that the pump is abnormal. Fig. 9(A) is a graph showing an example of the time series change in the number of activation times of the pump per unit time at the normal time. Fig. 9(B) is a graph showing an example of the time series change in the number of activation times of the pump per unit time at an abnormal time. Fig. 10 shows a first example for describing a failure analysis. Fig. 10(A) is a graph showing a first example of the time series change in the motor temperature at the normal time. Fig. 10(B) is a graph showing a first example of the time series change in the motor temperature at an abnormal time. Fig. 11 is a second example for describing a failure analysis. Fig. 11(A) is a graph showing a second example of the time series change in the motor temperature at the normal time. Fig. 11(B) is a graph showing a second example of the time series change in the motor temperature at an abnormal time. Fig. 12 is a flowchart showing an example of the process in the information processing apparatus 2.

(Step S201) First, the CPU 25 acquires the collected data, that is, the machine-type identification information and the state history information (containing the operation history information and the measurement-value history information), from the terminal apparatus 1.

(Step S202) Next, the CPU 25 performs data analysis for the state history information. For example, the CPU 25 compares the state history information of the pump apparatus P, to the normal-state history information about the same machine type as the monitoring target apparatus that is stored in the storage apparatus 3, and judges whether a state change characteristic of before the failure occurrence is in the state history information of the pump apparatus P. In the case where there is a state change characteristic of before the failure occurrence, the CPU 25, for example, may send the information about the state change characteristic of before the failure occurrence and/or the information about the failure event, to the terminal apparatus 1. Then, the terminal apparatus 1 may receive and display the information about the state change characteristic of before the failure occurrence and/or the information about the failure event. Thereby, the on-site service member can recognize the state change characteristic of before the failure occurrence and/or the failure anticipated in the future, and therefore, it is possible to assist the judgment by the on-site service member.

Here, a determination method for the state change characteristic of before the failure occurrence will be described. The terminal apparatus 1 may send the state history information before the failure occurrence of the monitoring target apparatus, for each failure event.
Then, the information processing apparatus 2, for each event, accumulates the state history information before the failure occurrence of the monitoring target apparatus, in the storage apparatus 3. Thereby, in the storage apparatus 3, the state history information before the failure occurrence of the monitoring target apparatus is accumulated for each failure event.

The CPU 25 of the information processing apparatus 2 statically processes the state history information before the failure occurrence, for each failure event, and determines the state change characteristic of before the failure occurrence. Specifically, for example, the CPU 25 extracts a turning point at which a parameter (for example, a motor temperature rising rate) suddenly changes, from multiple pieces of the state history information before the failure occurrence, and compares the parameters (for example, the motor temperature rising rate) before and after the turning point. Then, for example, in the case where there is a difference in average value of a previously determined percentage or more (or in the case where there is a statically significant difference), the CPU 25 determines that this state change (for example, a rise in the motor temperature rising rate) is the state change characteristic of before the failure occurrence. Thereby, it is possible to predict the occurrence of a future failure event. Since the state history information before the failure occurrence of the monitoring target apparatus is, as needed, accumulated in the storage apparatus 3 for each failure event, it is possible to enhance the detection accuracy for a proper state change characteristic of before the failure occurrence.

Further, in the storage apparatus 3, the machine-type identification information, the state change characteristic of before the failure occurrence, a repair work content, a replacement-needed component and others for the past failure are stored in an associated manner. Further, a failure component may be stored in an associated manner. In this case, the CPU 25, for example, refers to the storage apparatus 3. Then, the CPU 25, for example, extracts the repair work content and/or the replacement-needed component associated with the determined state change characteristic of before the failure occurrence and the machine-type identification information identifying the machine type of the pump apparatus P, from the storage apparatus 3, and executes the control for sending the information about the repair work content and/or the replacement-needed component to the terminal apparatus 1.

Thereby, it is possible to provide the information necessary for the on-site service member to provide an optimal maintenance work to the user of the pump apparatus P, and therefore, it is possible to create a repair plan before the pump apparatus P fails.

(Step S203) Then, the CPU 25 judges whether the operation state of the pump is normal, based on the result of the data analysis.

For example, it is assumed that one pump operation is continued for about four hours in the operation history information at the normal time that is stored in the storage apparatus 3, as shown in Fig. 8(A). Meanwhile, it is assumed that the activation and stop of the pump are repeated in a short time in the collected latest operation history information, as shown in Fig. 8(B). Here, the operation history information at the normal time is accumulated in the storage apparatus 3 for each machine type, by the process of step S204 described later.

In this case, when a pump operation whose duration is shorter than a threshold duration is repeated predetermined threshold times, the CPU 25 judges that the operation state of the pump 102 is not normal (that is, abnormal). Here, the threshold duration may be determined based on the average duration of the pump operation in the past. For example, the threshold duration may be half of the average duration of the pump operation in the past.

Further, for example, it is assumed that the number of activation times of the pump per hour is about 5 to 8 in the operation history information at the normal time that is stored in the storage apparatus 3, as shown in Fig. 9(A). Meanwhile, it is assumed that the number of activation times of the pump 102 per hour suddenly increases at time t1 in the collected latest operation history information, as shown in Fig. 9(B).

In this case, the CPU 25, for example, determines that a threshold Th is the maximum of the number of activation times of the pump per hour in the latest operation history information, and judges that the operation state of the pump apparatus P is not normal (that is, abnormal) when the number of activation times of the pump per hour in the latest operation history information exceeds the threshold Th.

(Step S204) In the case where it is judged that the operation state of the pump is normal in step S203, the CPU 25 stores the acquired collected data (that is, the state history information) in the storage apparatus 3, as the normal-state history information (also referred to as the data at the normal time).

(Step S205) Next, the CPU 25 performs the control for sending the judgment result (the judgment result of the pump normality, here) to the terminal apparatus 1. Thereafter, the process proceeds to step S215.

(Step S206) In the case where it is judged that the operation state of the pump is not normal in step S203, the CPU 25 judges whether there is precedent information about the abnormality.

(Step S207) In the case where it is judged that there is precedent information about the abnormality in step S206, the CPU 25 extracts an abnormality content, an improvement work plan, work instruction information and an estimation of component replacement cost, from the storage apparatus 3.

Here, as for the abnormality having the precedent, an abnormality content in the precedent, a judgment condition, an improvement work plan corresponding to the abnormality content in the precedent, work instruction information corresponding to the abnormality content in the precedent, and an estimation of component replacement cost corresponding to the abnormality content in the precedent are stored in the storage apparatus 3, in an associated manner.

For example, in the case of the abnormality shown in Fig. 8(B), when a pump operation whose duration is shorter than the threshold duration is repeated predetermined threshold times, a water leak on a pump pipe part is conceivable. In the case where there is a precedent of this situation, an abnormality content "the water leak on the pump pipe part", a judgment condition "when a pump operation whose duration is shorter than the threshold duration is repeated predetermined threshold times", an improvement work plan corresponding to "the water leak on the pump pipe part", work instruction information corresponding to "the water leak on the pump pipe part" and an estimation of component replacement cost corresponding to "the water leak on the pump pipe part" are previously stored in the storage apparatus 3, in an associated manner.

For example, in the failure case shown in Fig. 8(B), since a pump operation whose duration is shorter than the threshold duration is repeated predetermined threshold times, the CPU 25, in step S209, searches a record of the precedent information corresponding to the condition "when a pump operation whose duration is shorter than the threshold duration is repeated predetermined threshold times", in the storage apparatus 3. Then, in the case where there is a record of the precedent information (YES in step S206), the CPU 25 extracts an abnormality content, an improvement work plan, work instruction information and an estimation of component replacement cost that are contained in the record, from the storage apparatus 3.

For example, in the case of the abnormality shown in Fig. 9(B), the maximum of the number of activation times of the pump per hour in the operation history information at the normal time is adopted as the threshold Th, and when the maximum exceeds the threshold Th, a water leak on a pump pipe part is conceivable. In the case where there is a precedent of this situation, an abnormality content "the water leak on the pump pipe part", a judgment condition "when the number of activation times of the pump per hour in the operation history information at the normal time exceeds the maximum", an improvement work plan corresponding to "the water leak on the pump pipe part", work instruction information corresponding to "the water leak on the pump pipe part" and an estimation of component replacement cost corresponding to "the water leak on the pump pipe part" are previously stored in the storage apparatus 3, in an associated manner.

For example, in the case of the abnormality shown in Fig. 8(B), since a pump operation whose duration is shorter than the threshold duration is repeated predetermined threshold times, the CPU 25, in step S209, searches a record of the precedent information corresponding to the condition "when a pump operation whose duration is shorter than the threshold duration is repeated predetermined threshold times", in the storage apparatus 3. Then, in the case where there is a record of the precedent information (YES in step S206), the CPU 25 extracts an abnormality content, an improvement work plan, work instruction information and an estimation of component replacement cost that are contained in the record, from the storage apparatus 3.

(Step S208) Next, the CPU 25 performs the control for sending the judgment result to the terminal apparatus 1. Here, the judgment result contains the abnormality content, the improvement work plan, the work instruction information and the estimation of component replacement cost, in addition to the judgment content of the pump abnormality. Thereafter, the process proceeds to step S215.

(Step S209) In the case where there is no precedent information about the abnormality in step S209, the CPU 25 judges whether to perform transactions test in accordance with a previously determined rule, and executes a process of coordinating conceivable failure contents in accordance with a previously determined rule.

After step S209, the CPU 25 executes step S210 and steps S211 to S214 in parallel.

(Step S210) The CPU 25 performs the control for sending the judgment result, to the terminal apparatus 1. Here, the judgment result contains the judgment content of the pump abnormality. Thereafter, the process proceeds to step S215.

(Step S211) The CPU 25 executes a process for transmitting a notice of the occurrence of the abnormality and the detailed information, to a manufacturer of the pump apparatus 1.

(Step S212) The CPU 25 performs a request for the failure component (for example, the bearing), to the terminal apparatus 1. In response to the request, the terminal apparatus 1 displays the information for prompting the service member to find out the failure component, and displays the information for prompting the service member to input the failure component. Then, when the failure component is input by the service member, the terminal apparatus 1 sends the failure component identification information identifying the failure component, to the information processing apparatus 2. In this way, the CPU 25 acquires the failure component. Here, in the storage apparatus 3, for each failure component, the failure component identification information identifying the failure component and the work item for the failure component are stored in an associated manner. The CPU 25 refers to the storage apparatus 3, and acquires the work item corresponding to the acquired failure component.

(Step S213) The CPU 25 performs a failure analysis. An example of the case where a bearing failure occurs, for example, will be described. Fig. 10(A) shows L1 indicating a time series change in the pump operation state at the normal time and L2 indicating a time series change in the motor temperature at the normal time. Meanwhile, Fig. 10(B) shows L3 indicating a time series change in the pump operation state shortly before the bearing failure occurrence and L4 indicating a time series change in the motor temperature shortly before the bearing failure occurrence. As shown in Fig. 10(B), there is a great increase in the motor temperature rising rate shortly before the failure occurrence, compared to the normal time. However, the raised temperature is equal to or lower than a motor temperature upper limit, and is not abnormal in terms of motor design. That is, by the analysis of the motor temperature rising rate, it is possible to predict the bearing failure.

In the example of Fig. 10, the CPU 25, in step S213, compares the state history information when the abnormality has occurred this time, to the state history information about the same machine type at the normal time, for each of previously determined multiple state changes that contain the motor temperature rising rate. On this occasion, in the case where a state change obtained from the state history information when the abnormality has occurred this time does not fall within the normal range of the state change set from the state history information at the normal time, it is possible to predict the abnormality or the failure by using this state change. Therefore, in this case, the CPU 25 sets the state change as the judgment item.

Next, the CPU 25 extracts the state history information in which the extracted state change is found, from multiple pieces of state history information about the same machine type that failed in the past. For example, in the case of the example of Fig. 10(B), the CPU 25 extracts the state history information in which the motor temperature rising rate is higher than that at the ordinary time, in a range of lower than the motor temperature upper limit, from multiple pieces of state history information about the same machine type that failed in the past, as shown in Fig. 10(B). Then, using this extracted state history information, the CPU 25 determines a discrimination condition for discriminating the state history information in which the motor temperature rising rate is higher than that at the ordinary time, in the range of lower than the motor temperature upper limit. Specifically, for example, if the motor temperature rising rate rose at least by 20% or more relative to that at the ordinary time in each extracted state history information, the CPU 25 may determine that the discrimination condition is the rise of 20% or more relative to the motor temperature rising rate at the ordinary time.

Thus, the CPU 25 extracts the state history information in which the extracted state change is found, from multiple pieces of state history information about the same machine type that failed in the past, and determines the discrimination condition, using the extracted state history information.

Thereby, it is possible to newly discover the causal relation between the failure and the above extracted state change, which has been unable to be predicted in advance by the business operator. Thereby, it is possible to enhance the prediction accuracy for the failure. Therefore, the service member of the business operator can improve the validity of the schedule of the maintenance work, and therefore, can propose an optimal maintenance plan and/or budget plan to the user of the pump apparatus P.

(Step S214) The CPU 25 sets the work item (recommendation item or guidance item), based on the failure component acquired in step S212. For example, in the case where the failure component is the "bearing", the CPU 25 refers to the storage apparatus 3, and sets the "replacement of the bearing" as the work item (recommendation item or guidance item). Then, the CPU 25 performs the control for sending the information containing the judgment item and judgment condition set in step S213 and the set work item, to the terminal apparatus 1. Then, the terminal apparatus 1 adds the information, in the table T1 of Fig. 5 that is stored in the storage unit 11. Thereby, the terminal apparatus 1 can display the added work item, in the case where the added judgment condition is applicable with respect to the added judgment item.

Thereby, as needed, it is possible to add, as the judgment item of the terminal apparatus 1, the newly discovered causal relation between the failure and the state change, which has been unable to be predicted in advance by the business operator. After this, in the case of a similar tendency of the state change, the terminal apparatus 1 can display, as the work item, the guidance of the replacement of a component that is likely to fail in the future, and the service member of the business operator can propose the replacement of the component and the like before the failure.

Further, an example of the case where a disconnection failure occurs in the temperature measuring instrument (temperature sensor) 106, for example, will be described. Fig. 11(A) shows L5 indicating a time series change in the pump operation state at the normal time and L6 indicating a time series change in the motor temperature at the normal time. Meanwhile, Fig. 11(B) shows L7 indicating a time series change in the pump operation state shortly before the failure occurrence of the temperature measuring instrument (temperature sensor) 106 and L8 indicating a time series change in the motor temperature shortly before the failure occurrence of the temperature measuring instrument (temperature sensor) 106. As shown in Fig. 11(B), there is a great decrease in the motor temperature rising rate shortly before the failure occurrence, compared to the normal time. However, the raised temperature is equal to or lower than the motor temperature upper limit, and is not abnormal in terms of motor design. That is, by the analysis of the motor temperature rising rate, it is possible to predict the failure of the temperature measuring instrument (temperature sensor) 106. In this case, the CPU 25 performs the control for adding a record about the judgment in the table T1 of the terminal apparatus 1.

(Step S215) The CPU 25 stores the judgment result in the storage apparatus 3.

Thus, in the storage apparatus 3, for each failure component, the failure component identification information identifying the failure component and the work item for the failure component are stored in an associated manner. The terminal apparatus 1 accepts an input of the failure component of the failed monitoring target apparatus, from the operator, and sends the failure component identification information identifying the accepted failure component, to the information processing apparatus 2.

The CPU 25 refers to the storage apparatus 3, and acquires the work item corresponding to the received failure component identification information. The CPU 25 compares the state history information before the failure occurrence of the monitoring target apparatus and the normal-state history information about the same machine type as the failed monitoring target apparatus that is stored in the storage apparatus 3, and extracts the state change. The CPU 25 determines the discrimination condition for discriminating whether the extracted state change is normal. Then, the CPU 25 performs the control for sending the state change, the discrimination condition and the work item, to the terminal apparatus 1.

The terminal apparatus 1 receives the state change, the discrimination condition and the work item, and accumulates the state change, the discrimination condition and the work item, in an associated manner. In the case of receiving certain state history information, the terminal apparatus 1 judges whether the above accumulated state change for the certain state history information satisfies the corresponding discrimination condition. In the case of satisfying the discrimination condition, the terminal apparatus 1 displays the work item corresponding to the combination of the state change and the discrimination condition.

Thereby, in the case where the state change satisfies the discrimination condition, it is possible to display the work item appropriate to the failure site corresponding to the state change, and therefore, it is possible to create a repair plan before the monitoring target apparatus fails.

Further, by utilizing the information processing system S according to the first embodiment, it is possible to equalize the state diagnosis, which has conventionally depended on the personal skill and know-how of a checker at the time of a regular check, at a constant level. Further, it is possible to correct the instability of the post-repair life that is caused by the difference in judgment level due to the difference in working person. Further, a needless component replacement, a needless checkup and a needless repair are not performed. Therefore, it is possible to reduce the cost, and it is possible to reduce the waste that is generated in repair work and to expect the environmental improvement. Furthermore, even in a state where the operation of the pump apparatus P is maintained, it is possible to present a state report with a numerical evidence to the user at the time of the checkup.

Here, the precedent information may be updated, after the failure analysis in step S213. Specifically, for example, the CPU 25 may add the combination of the abnormality content acquired in step S212 and the set judgment condition, in the storage apparatus 3, as a new record of the precedent information. Further, to this record, the improvement work plan, the work instruction information and the estimation of component replacement cost may be added by the operator of the information processing apparatus 2. In this way, in the case where there is no precedent information, the precedent information is added. Thereby, when a similar abnormality occurs thereafter, it is possible to display the improvement work plan, the work instruction information, the estimation of component replacement cost and the like on the terminal apparatus 1, using the added precedent information. Therefore, when a similar abnormality occurs thereafter, the service member, by referring to the information displayed on the terminal apparatus 1, can immediately propose an appropriate improvement work plan, work content and component replacement cost and the like to the user on the site.

Furthermore, the CPU 25 may extract an elapsed period after the state change applicable to the judgment condition is found and before the failure occurs, from the data shortly before the failure, and may newly provide an item for the remaining life period in the corresponding record of the precedent information, to add the period. Then, after this, in the case of being applicable to the same judgment condition as this, the CPU 25 may extract an approximate period before the failure occurs, from the precedent information, and may execute the control for sending the period to the terminal apparatus 1. Then, for the corresponding component, the terminal apparatus 1 may display the information about the approximate period before the failure occurs. Thereby, the service member using the terminal apparatus 1 can lengthen or shorten the cycle of the maintenance checkup, depending on the information, and therefore, can adjust the cycle of the maintenance checkup depending on a targeted pump apparatus. Further, it is possible to determine an individual inspection standard for each inspection target apparatus, for example, by prolonging the initial cycle of the regular inspection or by changing the frequency of the regular inspection. Therefore, the service member of the business operator can propose a check program appropriate to the state of the facility, without an excessive checkup and facility investment, which are performed in the case where the conventional remote monitoring apparatus is installed.

Here, in the first embodiment, the communication between the pump apparatus P and the terminal apparatus 1 is the communication through the wireless LAN, but without being limited to this, may be another near field communication. Further, the information processing apparatus 2 and the storage apparatus 3 are connected through the local network LN, but without being limited to this, may be connected through a global network. Further, the terminal apparatus 1 may have the function of the information processing apparatus 2, or may have the functions of the information processing apparatus 2 and the storage apparatus 3.

### <Second Embodiment>

In recent years, external display devices such as personal computers, tablet computers and smartphones have been widely used, and it is possible that information is sent from a water supply apparatus to an external display device and the information is displayed on the external display device. Thereby, it is possible to increase the information amount that can be transmitted to the user, even when a dedicated display terminal is not provided. However, the content intended to be displayed on the external display device differs depending on the configuration of the water supply apparatus, as exemplified by the number of pumps and the water supply system, and it is difficult to prepare a display software program for each water supply apparatus. Further, the activation of the dedicated software program for each water supply apparatus is burdensome to a working member who monitors multiple water supply apparatuses.

A second embodiment has been made in view of the above-described circumstance, and has an object to provide a water supply apparatus and a control method that make it possible to communicate display information having a high versatility to the external display device.

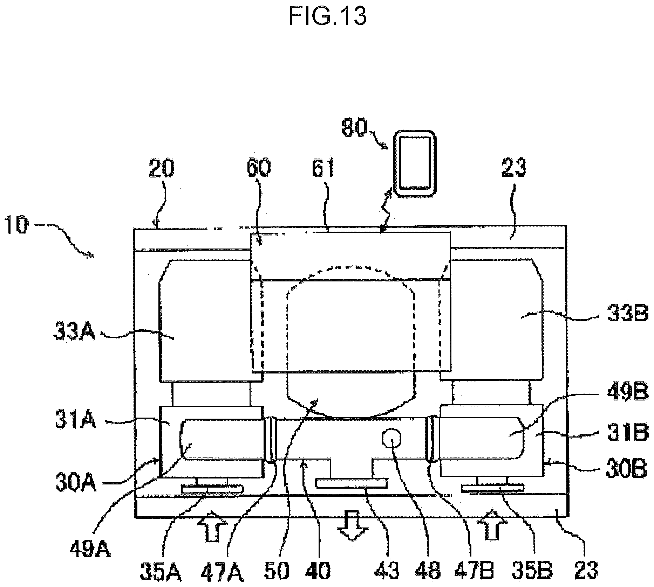

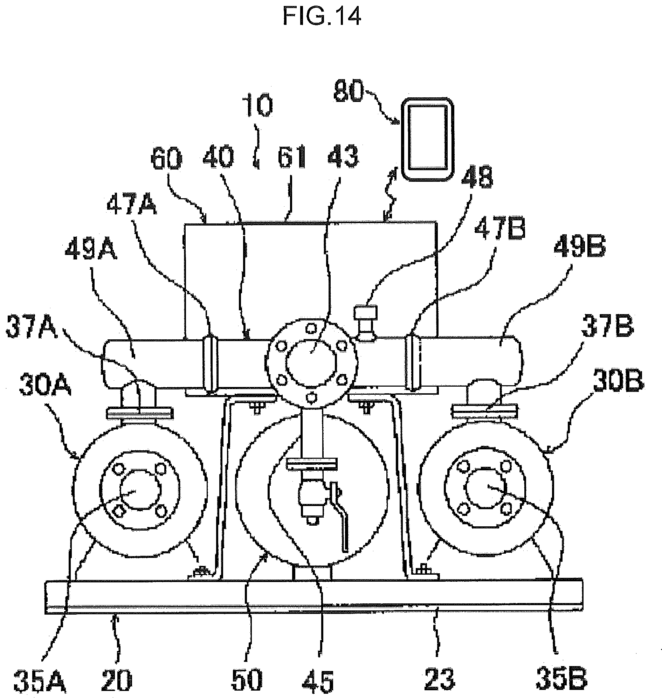

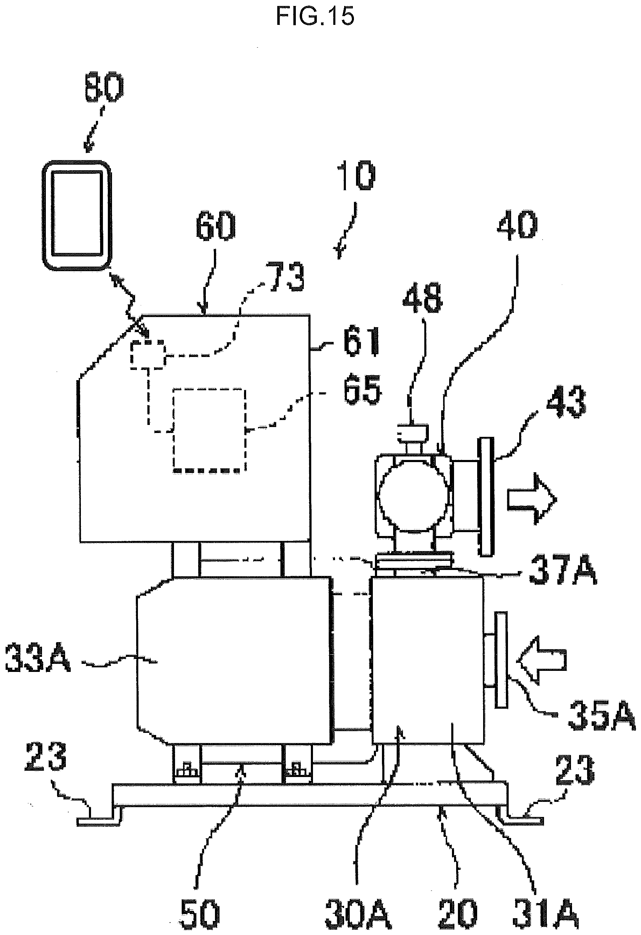

Hereinafter, the second embodiment will be described in detail with reference to the drawings. Fig. 13 to Fig. 15 are schematic diagrams showing an exemplary water supply apparatus according to the second embodiment. Fig. 13 is a plan view, Fig. 14 is a front view, and Fig. 15 is a left-side view. As illustrated, in a water supply apparatus 10, two pumps 30A, 30B and a pressure tank 50 disposed between the pumps 30A, 30B are placed on a base 20. Further, the water supply apparatus 10 is configured to include a discharge pipe 40 connected with the discharge sides of the pumps 30A, 30B, and a control panel 60 provided at an upper portion of the pressure tank 50. In the following, each constituent component will be described.

First, as the water supply system of the water supply apparatus 10 to a building, there are a water tank system in which the water in a water main is temporarily pooled in a water tank and the water in the water tank is fed to the water supply object by the pump, a direct coupled water supply system in which pressure boost is performed by the pump using the pressure of the water main and thereby the water is supplied to the water supply object, and the like. Further, as the water supply system to the water supply object, there are a direct feeding system in which the water pressurized by the pump is directly fed, a high position water tank system in which the water pressurized by the pump is temporarily pooled in a tank on the roof and the water is supplied by gravity flow, and the like.

In the base 20, which has a roughly rectangular flat shape, both edges in the longitudinal direction are bent in the downward direction and then are bent in the outward direction, so that clamped edges 23, 23 having an L-shape are configured.

The pumps 30A, 30B include pump units 31A, 31B and motor units 33A, 33B to drive the pump units 31A, 31B, respectively. Suction units 35A, 35B connected with supply pipes (not illustrated) branching from an unillustrated water tank or water main are provided on front-side end surfaces of the pump units 31A, 31B, and discharge units 37A, 37B are provided on upper surfaces of the pump units 31A, 31B. Incidentally, in the case of the direct coupled water supply system, the suction units 35A, 35B are connected with the supply pipes branching from the water main, through a backflow prevention apparatus (not illustrated), and an unillustrated pressure sensor to detect the pressure of the water main is provided in the supply pipe. Hereinafter, the pressure value to be detected by the pressure sensor that is provided in the supply pipe and that measures the pressure of the water main is referred to as the "suction-side pressure".

The discharge pipe 40 is a roughly T-shaped pipe, and both ends are connected with discharge units 37A, 37B of both pumps 30A, 30B, through flow switches 49A, 49B and check valves (non-return valves) 47A, 47B. Further, a discharge collecting pipe 43 is provided at the center of the discharge pipe 40. Thereby, the discharge sides of both pumps 30A, 30B are connected in parallel, and the discharge fluids of both pumps 30A, 30B join together in the discharge collecting pipe 43. Further, by the check valves 47A, 47B, the water in the discharge pipe 40 does not flow back to the sides of the pumps 30A, 30B when the pumps 30A, 30B are stopped. Further, a coupling pipe 45 for coupling the discharge pipe 40 to the pressure tank 50 is attached at a lower portion of the center of the discharge pipe 40, and furthermore, a pressure sensor 48 to detect in-pipe pressure is attached in the discharge pipe 40. Then, by the effect of the pressure tank 50 and the check valves 47A, 47B, the pressure in the discharge pipe 40 after the pumps 30A, 30B are stopped is kept at a constant pressure, unless the water is used. Hereinafter, the pressure value to be detected by the pressure sensor 48 is referred to as the "discharge-side pressure".

The control panel 60 is configured to incorporate, in a case 61, a control unit 65 constituted by various electric circuits that perform the operation control of the pumps. The control unit 65 includes a communication unit 73 to communicate with an external display device 80 by wire or wireless. As the external display device 80, for example, a versatile terminal device such as a smartphone, a mobile phone, a personal computer and a tablet computer, or a dedicated terminal device such as a remote monitoring device is employed.

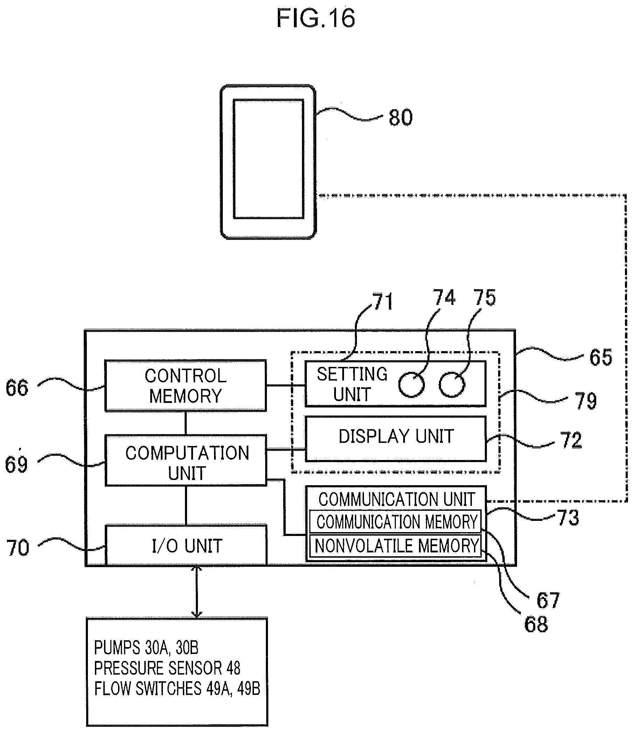

Fig. 16 is a schematic block diagram showing an example of the control unit. As illustrated, the control unit 65 includes a control memory 66, a communication memory 67, a nonvolatile memory 68, a computation unit 69, an I/O unit (an input unit and an output unit) 70, a setting unit 71, a display unit 72, and a communication unit 73. The setting unit 71 and the display unit 72 are provided on an operation panel 79 of the water supply apparatus 10. Further, the communication memory 67 and the nonvolatile memory 68 are included in the communication unit 73. However, without being limited to this example, the communication unit 73, the communication memory 67 and the nonvolatile memory 68 may be configured separately, for example.

Further, as shown in Fig. 15, the control unit 65 may be provided on a separate substrate from the communication unit 73. In this case, the control unit 65 and the communication unit 73 are connected by serial communication, a signal line or the like. It is allowed to adopt a configuration in which the control memory 66 and the nonvolatile memory 68 are disposed in the control unit 65 and the communication memory 67 is disposed in the communication unit 73, or it is allowed to adopt a configuration in which the control memory 66 is disposed in the control unit 65 and the communication memory 67 and the nonvolatile memory 68 are disposed in the communication unit 73. In the case where the control unit 65 and the communication unit 73 are provided on separate substrates, the communication unit 73 may be configured in a remote monitoring device that is installed in a place distant from the water supply apparatus 10 (for example, a building manager room, a remote monitoring room or the like) and that is connected with the control unit 65 by serial communication, a signal line or the like. Alternatively, it is allowed to adopt a configuration in which the control memory 66 and the nonvolatile memory 68 are disposed in the control unit 65 and the communication memory 67 and a nonvolatile memory (not illustrated) are disposed in the communication unit 73.

The setting unit 71 is used for setting various setting values (setting information) necessary to perform the water supply by external operation. The various setting values set in the setting unit 71 are stored in the control memory 66, and further, are stored in the nonvolatile memory 68. As an example, the user can input a stop pressure, a start pressure, and other information necessary for control, through the setting unit 71. Further, in the embodiment, the setting unit 71 includes a reset button 74 and a clear button 75. When the clear button 75 is pressed, the control unit 65 clears only a warning display and the like of the display contents on the display unit 72. Further, when the reset button 74 is pressed, the control unit 65 resets the data including abnormality information and maintenance information (for example, the operation time, the number of start times, the use period of a consumable component, and the failure history).

The display unit 72 functions as a user interface, and displays a variety of data such as the setting values stored in the control memory 66 or the communication memory 67, and the current operation condition (operation information) of the pumps 30A, 30B, for example, the operation or stop, operation frequency, electric current, suction-side pressure and discharge-side pressure of each of the pumps 30A, 30B, the trip of each inverter to drive the motor units 33A, 33B, a suction-side pressure drop warning, a water tank warning, and the like.

As the nonvolatile memory 68, a memory such as a ROM, a HDD, an EEPROM, a FeRAM and a flash memory is used. In the nonvolatile memory 68, a control program for controlling the water supply apparatus 10, the apparatus information of the water supply apparatus 10, the failure history, the operation history, the data input through the setting unit 71, and the like are stored. Here, the apparatus information of the water supply apparatus 10 contains at least one of the number of pumps, the pump bore, the pump output, the water supply system, the machine type name of the water supply apparatus and the like, and may be stored in the nonvolatile memory 68 at the factory in advance, or may be stored by a working member when the water supply apparatus 10 is installed. Here, in place of the pump output, the capacity of the motor units 33A, 33B, the capacity of the inverters for driving the motor units 33A, 33B, and the like may be used. Further, in the nonvolatile memory 68, the failure history is stored at the time of the occurrence of the failure, and the information of the operation history of the water supply apparatus 10 and the like is also stored periodically.

The apparatus information of the water supply apparatus 10 is determined depending on the configuration of the water supply apparatus, and therefore, when an improper setting is performed, there is a fear that the water supply cannot be normally performed. Therefore, in the embodiment, the apparatus information stored in the nonvolatile memory 68 cannot be changed by the command from the external display device 80 and the operation of the setting unit 71. Alternatively, an authority is provided by a password or the like, and the apparatus information can be changed only by a user who has the authority of the change in the apparatus information.

As the control memory 66 and the communication memory 67, a volatile memory such as a RAM is used. Further, a memory other than a volatile memory may be used, if the access time for data reading and writing of the memory is so short that there is no problem in the control program of the water supply apparatus 10. The information for performing the operation control of the water supply apparatus 10 is stored in the control memory 66, and the data to be sent and received for the external display device 80 and the like is stored in the communication memory 67. Here, the control memory 66 and the communication memory 67 may be constituted by separate circuit substrates or circuit elements, or may be virtually separated on a single circuit substrate or circuit element. When the power of the water supply apparatus 10 is turned on, the control unit 65 reads the apparatus information and setting information stored in the nonvolatile memory 68, and stores necessary information in the control memory 66. In the control memory 66, a variety of data, for example, the data (the operation time, the integrated value and the like) of the computation result in the computation unit 69, the pressure value (the suction-side pressure and the discharge-side pressure), the setting data input through the setting unit 71, the data input through the I/O unit 70 or output through the I/O unit 70, and the like, is stored.

As the I/O unit 70, a port or the like is used. The I/O unit 70 receives an input signal from the pressure sensor 48, signals from the flow switches 49A, 49B, and the like, and sends the signals to the computation unit 69. As the computation unit 69, a CPU is used. The computation unit 69 performs the setting of a variety of data for operating the pumps 30A, 30B, clocking, computation and the like, based on the program and a variety of data stored in the control memory 66 and the signals input from the I/O unit 70. The output from the computation unit 69 is input to the I/O unit 70.

Further, the I/O unit 70 and the inverters to drive the pumps 30A, 30B are connected with each other by communication means such as RS422, RS232C and RS485. From the I/O unit 70 to the pumps 30A, 30B, a variety of setting values, a frequency command value, and control signals such as a start-stop signal (operation/stop signal) are sent through the inverters. From the pumps 30A, 30B to the I/O unit 70, the operation condition (operation information) such as the actual frequency value and electric current value is successively sent through the inverters.

Incidentally, analog signals and/or digital signals can be used as the control signals to be sent and received between the I/O unit 70 and the inverters to drive the pumps 30A, 30B. For example, analog signals can be used for rotational frequency and the like, and digital signals can be used for an operation stop command and the like. Further, in the case where the variable speed control of the pumps 30A, 30B is not performed, the inverters may be excluded.

The communication unit 73 is configured to be able to communicate with the external display device 80 by wire communication or wireless communication. As the wireless communication, for example, the near field communication (NFC) technology can be used. Further, an arbitrary wireless communication technique such as Bluetooth (R) and Wi-Fi can be used. However, NFC has an advantage in that the communication can be completed simply by making the external display device 80 close to the control unit 65. Further, as the wire communication, for example, the communication may be performed by providing an external connection terminal such as a USB (Universal Serial Bus) in the control unit 65 and connecting the external display device 80 to the external connection terminal, or a serial communication such as RS422, RS232C and RS485 may be used.

In the embodiment, as the display unit 72, it is possible to employ a simple display device such as a seven-segment LED and an indication light. Further, as the external display device 80, it is possible to employ a sophisticated display device with a liquid crystal screen using a touch input technique and a press button technique. In this case, it is possible to display simple information on the display unit 72, and it is possible to display a large amount of information on the external display device 80. By such a configuration, the information about the condition of the operation of the pumps 30A, 30B by the control unit 65 and the like (for example, a target pressure SV, a current pressure PV, the operation/stop of the pumps 30A, 30B, the frequencies of the pumps 30A, 30B, and the like) are displayed on a single screen of the external display device 80. Thereby, even a user inexperienced in the water supply apparatus can recognize the state of the water supply apparatus 10, with no misunderstanding. Further, the water supply apparatus 10 is sometimes installed in an electrically noisy environment such as a machine room or a pump room. In preparation for that case, as the display unit 72, it is allowed to use a display device constituted by a seven-segment LED, an indication light, a mechanical press button and the like, which are more resistant to electric noise than a liquid crystal display or a touch panel. Thereby, even when the electric noise generated from the external environment causes an abnormality in the liquid crystal display or touch panel operation on the external display device 80, it is possible to perform, on the display unit 72, the minimum display and operation necessary for the operation of the water supply apparatus 10. Accordingly, the water supply apparatus 10 can be installed even in an electrically noisy environment.

Furthermore, in the case of employing a versatile terminal device such as a smartphone, a mobile phone, a personal computer or a tablet computer as the external display device 80, it is allowed to install, in the device, a dedicated application software program for making the device serve as the external display device 80. In this case, multiple dedicated application software programs may be prepared in accordance with the level or purpose of the user.

Incidentally, it is allowed to provide only the external display device (sophisticated display device) 80 without providing the operation panel 79 (display unit 72) in the control unit 65. In this case, the external display device 80 is configured to be able to perform all the above-described functions of the operation panel 79. Since it is unnecessary to provide the display device itself in the water supply apparatus 10, it is possible to further reduce the total cost of the water supply apparatus 10. Further, it is allowed that the setting unit 71 of the operation panel 79 does not include the reset button 74 and the clear button 75 and instead the external display device 80 includes a reset button (not illustrated) or a clear button (not illustrated). When the clear button on the external display device 80 is pressed, the display contents displayed on the external display device 80 are erased.

Next, the control of the water supply apparatus 10 by the control unit 65 will be described. When the discharge-side pressure decreases to a predetermined start pressure in the stop state of the pumps 30A, 30B, the control unit 65 starts at least one of the pumps 30A, 30B. Specifically, the control unit 65 outputs a command to start the drive of the pumps 30A, 30B, to the motor units 33A, 33B (to the inverters, in the case of including the inverters). During the operation of the pumps 30A, 30B, a control such as an estimated terminal pressure keeping control or a target pressure keeping control is performed at a pressure (setting pressure) that is set. Specifically, in the case of the estimated terminal pressure keeping control, the target pressure (SV) is set using the rotation speed of the pumps 30A, 30B and a target pressure control curve, and in the case of the target pressure keeping control, the target pressure (SV) is set to the setting pressure. Further, the current pressure (PV) is set to the discharge-side pressure. Then, the PID operation is performed with the deviation between the SV and the PV, and a command rotation speed of the pumps 30A, 30B is set. Incidentally, in the case where the estimated terminal pressure keeping control is performed in the direct coupled water supply, the target pressure control curve may be corrected based on the suction-side pressure. Specifically, the suction-side pressure is added in the target pressure control curve, and the target pressure (SV) is calculated. Further, when multiple pumps are included as in the case of the embodiment, the control unit 65 also performs the control of the number of pumps depending on water quantity, in the number of pumps that can be activated concurrently (parallel operation pump number).

When the use of water in the building decreases during the operation of the pumps 30A, 30B, the flow switches 49A, 49B detect the minute water quantity, and send the detection signal to the control unit 65. In response to the detection signal, the control unit 65 outputs a command to the pumps 30A, 30B, to increase the rotation speed of the pumps 30A, 30B until the discharge-side pressure reaches a predetermined operation stop pressure and stop the pumps 30A, 30B (small water quantity stop) after the accumulation in the pressure tank 50. When water is used again in the building after the small water quantity stop of the pumps 30A, 30B, the discharge-side pressure decreases to the start pressure or lower, and the pumps 30A, 30B are started. Incidentally, when there are multiple pumps as in the case of the embodiment, it is preferable to perform the rotation of the pumps 30A, 30B to be started, and prevent water from being retained in the pumps 30A, 30B. Further, as the method for detecting the small water quantity, other means such as the low load or shutoff pressure with the electric current values of the motor units 33A, 33B may be used, instead of the use of the flow switches 49A, 49B.

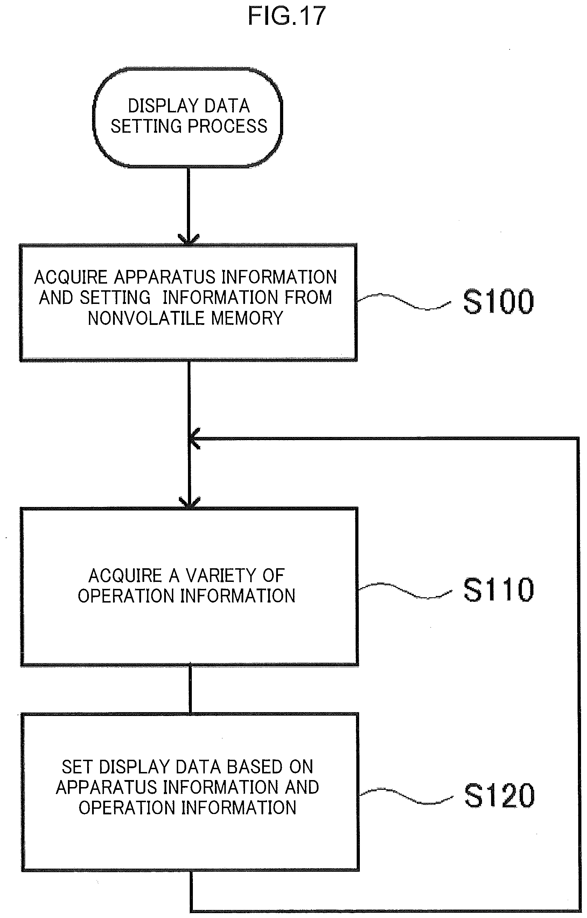

Fig. 17 is a flowchart showing an exemplary display data setting process that is executed by the control unit. When the power of the water supply apparatus 10 is turned on (the water supply apparatus 10 is activated), the control unit 65, first, reads the apparatus information and setting information stored in the nonvolatile memory 68, and stores necessary information in the control memory 66 (step S100). Subsequently, the control unit 65 performs the above control of the water supply apparatus 10, based on the apparatus information and setting information stored in the control memory 66. At this time, the control unit 65 acquires the information (operation information) about the operation state of the pumps 30A, 30B through the I/O unit 70, and stores the operation information in the control memory 66 (step S110). Further, based on the apparatus information, setting information and operation information stored in the control memory 66, the control unit 65 sets and stores the display information to be sent from the communication unit 73, in the communication memory 67 (step S120). Then, the control unit 65 executes the processes of step S110 and step S120 repeatedly until the power of the water supply apparatus 10 is turned off.
The display information set in this way is sent to the external display device 80 through the communication unit 73, when the water supply apparatus 10 establishes the communication connection with the external display device 80. Incidentally, in the embodiment, the control unit 65 sets and stores the display information in the communication memory 67, whenever the operation information is input from the I/O unit 70. However, without being limited to this example, the control unit 65 may set and store the display information in the communication memory 67, every predetermined time (for example, every several seconds, or every several minutes), or may set and store the display information in the communication memory 67, by an external command.

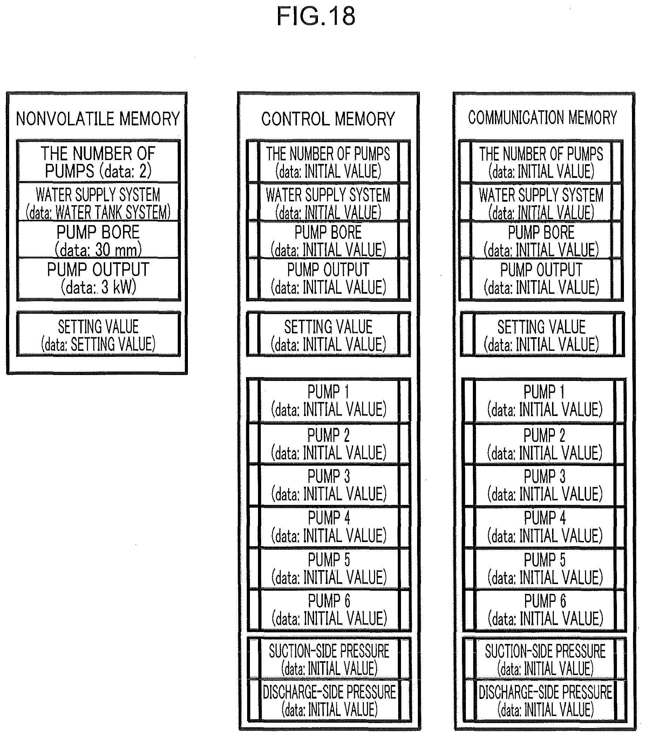

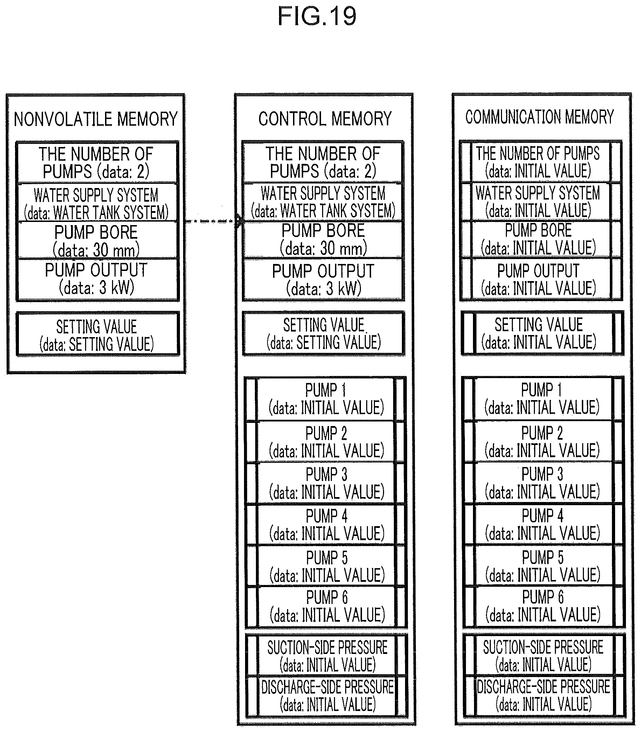

Fig. 18 is a diagram showing an example of the data stored in the nonvolatile memory, the data stored in the control memory and the data stored in the communication memory shortly after the power of the water supply apparatus 10 is turned on. Further, each of Fig. 19 to Fig. 21 is a diagram showing an example of the data stored in the nonvolatile memory, the data stored in the control memory and the data stored in the communication memory when the processes of steps S100 to S120 in Fig. 17 are executed. Here, in Fig. 18 to Fig. 21, memory regions in each of which vertical lines are written at the right and left sides of a box show that initial values have been stored.

As shown in Fig. 18, the information stored in the nonvolatile memory 68 is held even when power is not supplied. As an example, in the nonvolatile memory 68, the number of pumps (2 pumps), the water supply system (water tank system), the pump bore (30 mm), and the pump output (3 kW) are stored as the apparatus information, in the example shown in Fig. 18. Further, in the nonvolatile memory 68, various setting values are stored as the setting information.

Meanwhile, in the embodiment, the storages of the control memory 66 and the communication memory 67 are not held when power is not supplied to the water supply apparatus 10, and in memory regions of them, the initial values are stored when the power is activated. Here, in the embodiment, the memory regions of the control memory 66 and communication memory 67 in which the operation information is stored are configured to be able to handle many machine types of water supply apparatuses. That is, the memory regions are configured to handle the apparatus information that is of conceivable apparatus information and that has the largest data volume. For example, in the water supply apparatus 10 in the embodiment, although the number of pumps is two, the memory regions are reserved so as to allow for the storage of the information about the operation states of a predetermined number of pumps (six pumps in the example shown in Fig. 18). Further, the water supply apparatus 10 in the embodiment, in which the water supply system is a water tank system, does not include a pressure sensor to detect the suction-side pressure, but memory regions for storing the suction-side pressure are reserved, in order to support also a water supply apparatus with a direct coupled water supply system. Thereby, in the case where the water supply apparatus has a direct coupled water supply system, the control unit 65 can store the detected suction-side pressure in the control memory 66. By such a memory configuration, it is possible to unify the format including the volume and order of the information to be stored in the control memory 66 and the communication memory 67, regardless of the apparatus configuration of the water supply apparatus 10. Further, in the example shown in Fig. 18 to Fig. 21, the information about the pump, the suction-side pressure and the discharge-side pressure are shown as the operation information, but without being limited to this example, the target pressure SV, the current pressure PV, the operation mode, the use period of a consumable component, the failure history and the like may be contained. Further, the information about the pump contains at least one of the operation/stop of the pump, the command frequency, the detection frequency, the integrated operation time, the number of times of the operation and the like.

When the power of the water supply apparatus 10 is turned on, the control unit 65 executes the process of step S100 in Fig. 17. Thereby, as shown in Fig. 19, the apparatus information and setting information in the nonvolatile memory 68 are read, and are stored in predetermined memory regions in the control memory 66.

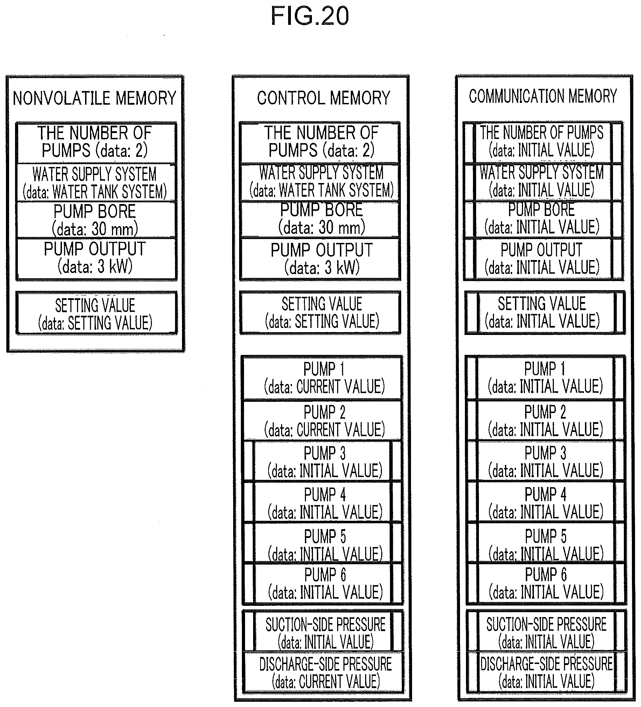

Subsequently, the control of the water supply apparatus 10 is performed by the control unit 65, and as shown in Fig. 20, the operation information of the pumps 30A, 30B is stored in the control memory 66. Here, in the embodiment, the storage of the operation information in the control memory 66 is performed based on the apparatus information read from the nonvolatile memory 68. For example, in the embodiment, since the number of pumps is two, the control unit 65 stores the operation information about the two pumps 30A, 30B, in the control memory 66. Further, for the remaining pumps (the four pumps resulting from excluding the two pumps from the predetermined number of pumps), the control unit 65 does not change the information and keeps the initial values. Furthermore, in the embodiment, since the water supply system is a water tank system, the control unit 65 updates the discharge-side pressure, and does not update the suction-side pressure. By such a control, it is possible to prevent the operation information from being stored in the control memory 66, even when the I/O unit 70 includes an input port corresponding to non-existent operation information and the non-existent operation information is input by noise or the like. Further, in the embodiment, when the operation information stored in the control memory 66 is the initial value, the operation information is regarded as being non-existent. This initial value only needs to be a value deviated from a normal value of each operation information. Incidentally, the control unit 65 may update the memory regions in which the operation information is non-existent, by storing the information indicating that effect. However, in the case where the initial value shows that the operation information is non-existent, there is an advantage in that the writing volume of the control memory 66 can be decreased.

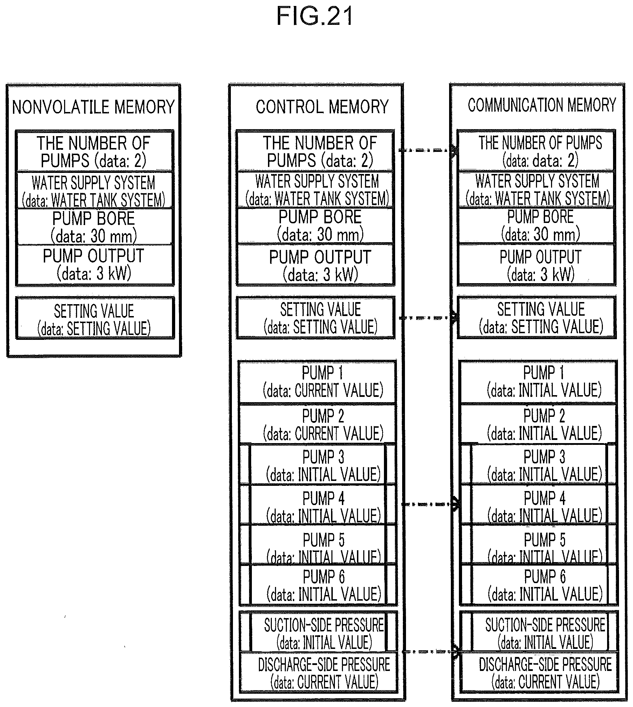

Then, based on the apparatus information and the operation information, the control unit 65 sets and stores the display information in the communication memory 67. In the example shown in Fig. 21, the control unit 65 stores, in the communication memory 67, the information stored in the control memory 66, as the display information, with no change. However, without being limited to this example, the control unit 65 may sort the operation information in a previously determined order, or may convert the information into a format appropriate to the reception by the external display device 80. Further, for the display information, an encryption process and the like may be performed. The display information stored in the communication memory 67 in this way is sent to the external display device 80 through the communication unit 73, when the water supply apparatus 10 establishes the communication connection with the external display device 80. The display information is set based on the apparatus information stored in the nonvolatile memory, and therefore, can be changed into the information having a high versatility, for example, by adopting a previously determined unified format for handling multiple pieces of apparatus information. Therefore, the external display device 80, after receiving the display information, can display the display information using a software program having a high versatility, without a dedicated software program for each apparatus information.

### (Modification)

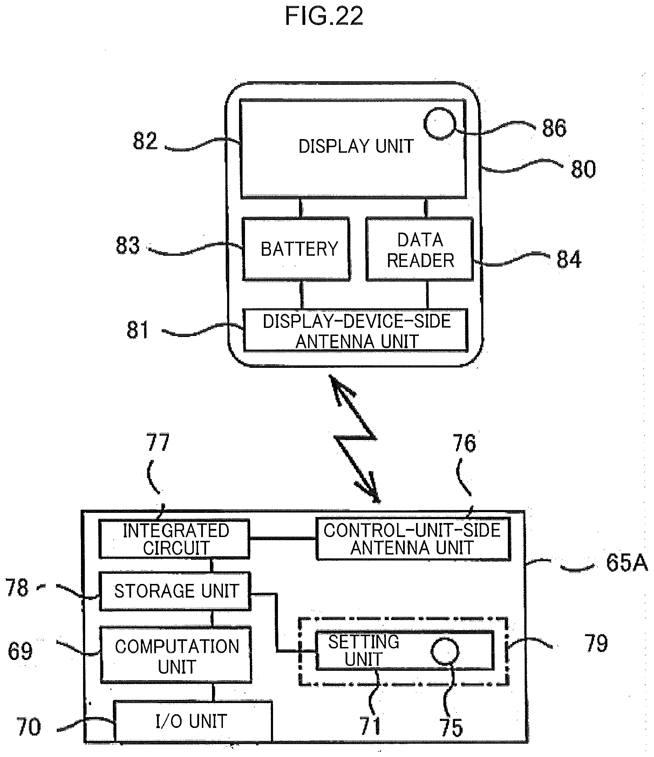

Fig. 22 is a diagram showing a control unit and an external display device in a modification. A control unit 65A in the modification is different from the control unit in the embodiment, in that a control-unit-side antenna unit 76 is included instead of the communication unit 73 and in that an integrated circuit 77 connected with the control-unit-side antenna unit 76 is included. Further, in the example shown in Fig. 22, the control memory 66, communication memory 67 and nonvolatile memory 68 in the embodiment are included in a storage unit 78. The integrated circuit 77 is electrically connected with the storage unit 78. Incidentally, the control unit 65A shown in Fig. 22 does not include the display unit 72, but may include the display unit 72. Further, the control unit 65A in the modification may be provided integrally with another constituent of the water supply apparatus 10, as exemplified by the pumps 30A, 30B, or may be provided as an apparatus for relaying the data of the water supply apparatus 10, separately from the other constituents of the water supply apparatus 10.

The external display device 80 in the modification includes a display-device-side antenna unit 81 to send and receive a radio wave, a display unit 82, a battery 83, and a data reader 84. In the external display device 80, the display information received by the display-device-side antenna unit 81 is read by the data reader 84. Then, the display information (for example, the target pressure SV, the current pressure PV, the frequencies of the pumps 30A, 30B, and the like) read by the data reader 84 is displayed on the display unit 82. The battery 83 supplies electric power to the display-device-side antenna unit 81, the data reader 84 and the display unit 82.

As the external display device 80, for example, a versatile terminal device such as a smartphone, a mobile phone, a personal computer, a tablet computer may be used, or a dedicated terminal device such as a remote monitoring device may be used. Particularly, by using a versatile terminal device such as a smartphone as the external display device, it is possible to reduce the cost for producing a dedicated display device, and therefore, it is possible to decrease the cost of the water supply apparatus. Further, multiple users can make individual versatile terminal devices display the state of the water supply apparatus 10, and therefore, it is possible to provide display operations according to the levels or purposes of the users. For example, it is possible to inexpensively provide a water supply apparatus that can give the information about the control of the pumps 30A, 30B, and the like, to a user having no special knowledge about the water supply apparatus, as exemplified by a condominium manager and a building manager, in an understandable way.

The external display device 80 is connected with the control unit 65A by the near field communication (NFC) technology. More specifically, when the display-device-side antenna unit 81 generates a radio wave in a state where the external display device 80 is close to the control unit 65A, the control-unit-side antenna unit 76 receives the radio wave, and the control-unit-side antenna unit 76 converts the radio wave into electric power. The electric power, which is supplied to the integrated circuit 77 and the storage unit 78, drives the integrated circuit 77 and the storage unit 78. The integrated circuit 77 reads the display information stored in the storage unit 78, and sends the data to the control-unit-side antenna unit 76. Together with the data, the control-unit-side antenna unit 76 sends a radio wave to the display-device-side antenna unit 81. The data reader 84 reads the data received by the display-device-side antenna unit 81, and displays the data on the display unit 82.

The external display device 80 may include a clear button 86 for erasing the display contents and a reset button (not illustrated) for resetting data. When the user presses the clear button 86, the display contents on the display unit 82 are erased. Further, when the user presses the reset button, a reset signal is sent to the control unit 65A, and the control unit 65A, after receiving the reset signal, resets the data of the maintenance information and the like. The clear button 86 in the embodiment is a virtual button that appears on the screen of the display unit 82, but the clear button 86 may be a mechanical button that is provided outside the display unit 82. The control unit 65A in the modification does not include a reset button, but the control unit 65A may be provided with a clear button and a reset button.

In the modification, the display information stored in the storage unit 78 of the control unit 65A is sent from the control unit 65A to the external display device 80 by the wireless communication. According to the modification, even when the water supply apparatus 10 is powered off, the control-unit-side antenna unit 76 can generate electric power, from the radio wave emitted from the external display device 80, and can drive the integrated circuit 77 and the storage unit 78. Accordingly, even when electric power is not supplied to the control unit 65A, for example, during the maintenance of the water supply apparatus 10, the external display device 80 can acquire the display information from the storage unit 78 of the control unit 65A and can display the display information.

NFC is a technology for performing an intercommunication at a near field of several centimeters. In the case where the control unit 65A in the modification is provided integrally with another constituent of the water supply apparatus 10, the user and the maintenance member make the external display device 80 close to the control unit 65A at a distance allowing for the intercommunication, in order to display a variety of information on the external display device 80. This means that the user and the maintenance member are close to the water supply apparatus 10 when operating the external display device 80. This leads to the prevention of an unexpected action of the water supply apparatus 10 due to an incorrect operation, for example, the prevention of the pump activation due to the press of the reset button during the replacement work for a consumable component. Further, at a site where multiple water supply apparatuses 10 are installed, it is possible to perform the intercommunication at a distance close to a water supply apparatus 10 intended to be displayed, and therefore, it is possible to prevent an incorrect display such as the display of the state of an unintended different water supply apparatus.

Incidentally, in Fig. 16, the communication unit 73 may communicate with a remote monitoring apparatus (for example, a personal computer, a smartphone or a dedicated monitor) provided in the maintenance company or the building manager room, through a public line, a network, a private line or the like. In this case, the display information and the like are sent from the communication unit 73 to the remote monitoring apparatus. The remote monitoring apparatus may include a display unit that displays the display information. Further, the remote monitoring apparatus may send the display information received from the water supply apparatus 10, to the external display device 80. Further, the external display device 80 and the remote monitoring apparatus may send the display information received from the water supply apparatus 10, to an external server, and may store the display information in the external server.

Further, the apparatus information may contain the machine-type identification information indicating the configuration of the water supply apparatus 10 (for example, the machine type name, the model number and the like). Further, from the machine type name, the control unit 65 may acquire the apparatus information (the information of at least one of the number of pumps, the pump output, the pump bore and the water supply system, for example) of the water supply apparatus 10, using a previously stored correspondence table. On the contrary, the control unit 65 may acquire the machine-type identification information of the water supply apparatus, based on the apparatus information stored in the nonvolatile memory 68. Then, the control unit 65 may set the acquired apparatus information or machine-type identification information as the display information, and may display the display information on the external display device 80.

Furthermore, the apparatus information may contain a serial number for identifying an individual water supply apparatus 10. Further, the external display device 80 and the remote monitoring apparatus may send the serial number received from the water supply apparatus 10, to external server, and may acquire the apparatus information of the water supply apparatus 10 that is stored in the external server and that corresponds to the serial number (the information of at least one of the number of pumps, the pump output, the pump bore and the water supply system, for example). Then, based on the acquired apparatus information or the machine-type identification information, the data may be displayed on the external display device 80.

### <Third Embodiment>

As described above, the water supply apparatus is sometimes installed in an electrically noisy environment such as a machine room or a pump room, and in the case of changing the setting information of the water supply apparatus using a portable terminal, there is a fear that the setting information is changed into an unintended value by the influence of noise. Further, in the case where the water supply apparatus includes communication means, there is also a fear that a third person unrightfully accesses the water supply apparatus. Particularly, when the setting information is changed into the information by which the water supply apparatus cannot normally operate or when the setting information is greatly changed from the current setting information, there is a fear of the malfunction of the water supply apparatus. The water supply to the water supply object is a lifeline, and the malfunction of the water supply apparatus can cause water stoppage in the worst case, and needs to be avoided as much as possible.

A third embodiment has been made in view of the above-described circumstance, and has an object to provide a water supply apparatus and a control method that make it possible to change the setting information by the external display device and to prevent the malfunction of the water supply apparatus due to an unintended change in the setting information.

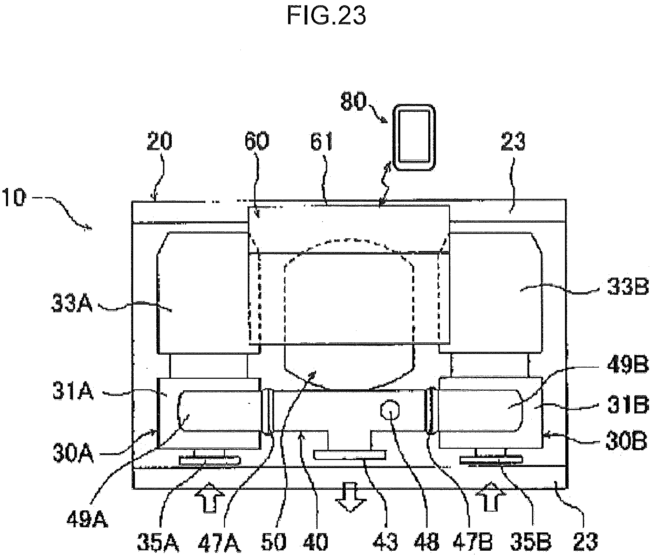

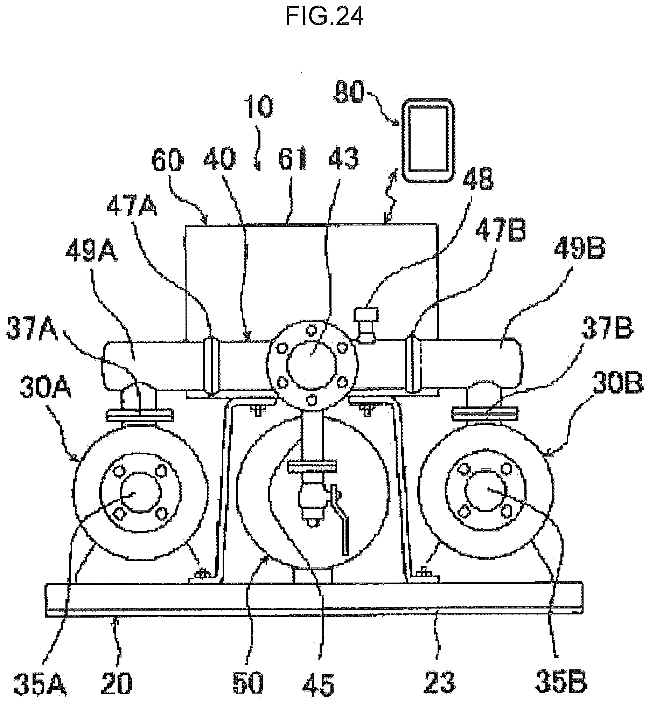

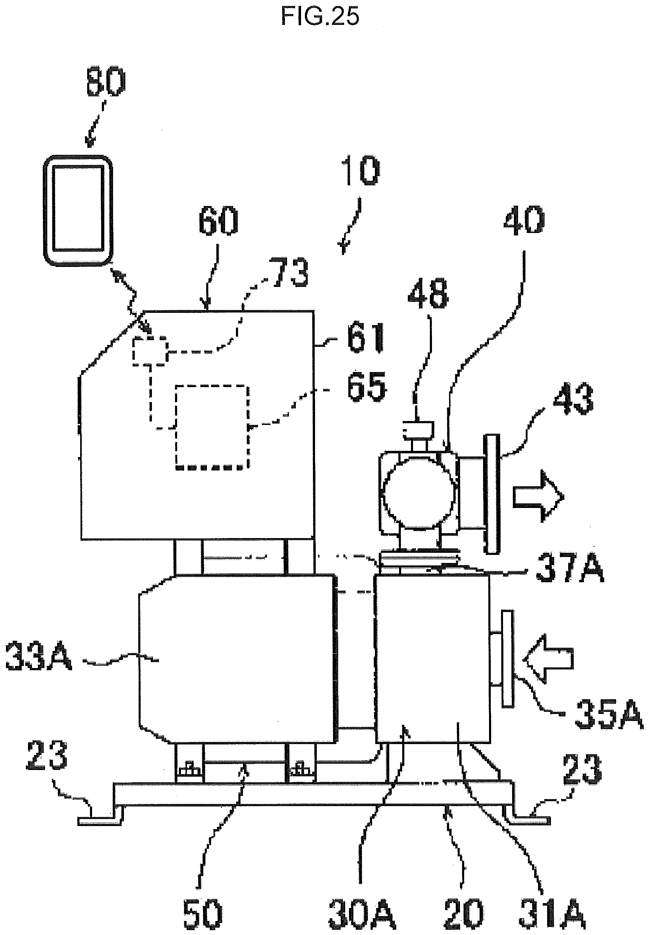

Hereinafter, the third embodiment will be described in detail with reference to the drawings. Fig. 23 to Fig. 25 are schematic diagrams showing an exemplary water supply apparatus according to the third embodiment. Fig. 23 is a plan view, Fig. 24 is a front view, and Fig. 25 is a left-side view. As illustrated, in a water supply apparatus 10, two pumps 30A, 30B and a pressure tank 50 disposed between the pumps 30A, 30B are placed on a base 20. Further, the water supply apparatus 10 is configured to include a discharge pipe 40 connected with the discharge sides of the pumps 30A, 30B, and a control panel 60 provided at an upper portion of the pressure tank 50. In the following, each constituent component will be described.

First, as the water supply system of the water supply apparatus 10 to a building, there are a water tank system in which the water in a water main is temporarily pooled in a water tank and the water in the water tank is fed to the water supply object by the pump, a direct coupled water supply system in which pressure boost is performed by the pump using the pressure of the water main and thereby the water is supplied to the water supply object, and the like. Further, as the water supply system to the water supply object, there are a direct feeding system in which the water pressurized by the pump is directly fed, a high position water tank system in which the water pressurized by the pump is temporarily pooled in a tank on the roof and the water is supplied by gravity flow, and the like.

In the base 20, which has a roughly rectangular flat shape, both edges in the longitudinal direction are bent in the downward direction and then are bent in the outward direction, so that clamped edges 23, 23 having an L-shape are configured.

The pumps 30A, 30B include pump units 31A, 31B and motor units 33A, 33B to drive the pump units 31A, 31B, respectively. Suction units 35A, 35B connected with supply pipes (not illustrated) branching from an unillustrated water tank or water main are provided on front-side end surfaces of the pump units 31A, 31B, and discharge units 37A, 37B are provided on upper surfaces of the pump units 31A, 31B. Incidentally, in the case of the direct coupled water supply system, the suction units 35A, 35B are connected with the supply pipes branching from the water main, through a backflow prevention apparatus (not illustrated), and an unillustrated pressure sensor to detect the pressure of the water main is provided in the supply pipe. Hereinafter, the pressure value to be detected by the pressure sensor that is provided in the supply pipe and that measures the pressure of the water main is referred to as the "suction-side pressure".

The discharge pipe 40 is a roughly T-shaped pipe, and both ends are connected with discharge units 37A, 37B of both pumps 30A, 30B, through flow switches 49A, 49B and check valves (non-return valves) 47A, 47B. Further, a discharge collecting pipe 43 is provided at the center of the discharge pipe 40. Thereby, the discharge sides of both pumps 30A, 30B are connected in parallel, and the discharge fluids of both pumps 30A, 30B join together in the discharge collecting pipe 43. Further, by the check valves 47A, 47B, the water in the discharge pipe 40 does not flow back to the sides of the pumps 30A, 30B when the pumps 30A, 30B are stopped. Further, a coupling pipe 45 for coupling the discharge pipe 40 to the pressure tank 50 is attached at a lower portion of the center of the discharge pipe 40, and furthermore, a pressure sensor 48 to detect in-pipe pressure is attached in the discharge pipe 40. Then, by the effect of the pressure tank 50 and the check valves 47A, 47B, the pressure in the discharge pipe 40 after the pumps 30A, 30B are stopped is kept at a constant pressure, unless the water is used. Hereinafter, the pressure value to be detected by the pressure sensor 48 is referred to as the "discharge-side pressure".

The control panel 60 is configured to incorporate, in a case 61, a control unit 65 constituted by various electric circuits that perform the operation control of the pumps. The control unit 65 includes a communication unit 73 to communicate with an external display device 80 by wire or wireless. As the external display device 80, for example, a versatile terminal device such as a smartphone, a mobile phone, a personal computer and a tablet computer, or a dedicated terminal device such as a remote monitoring device is employed.

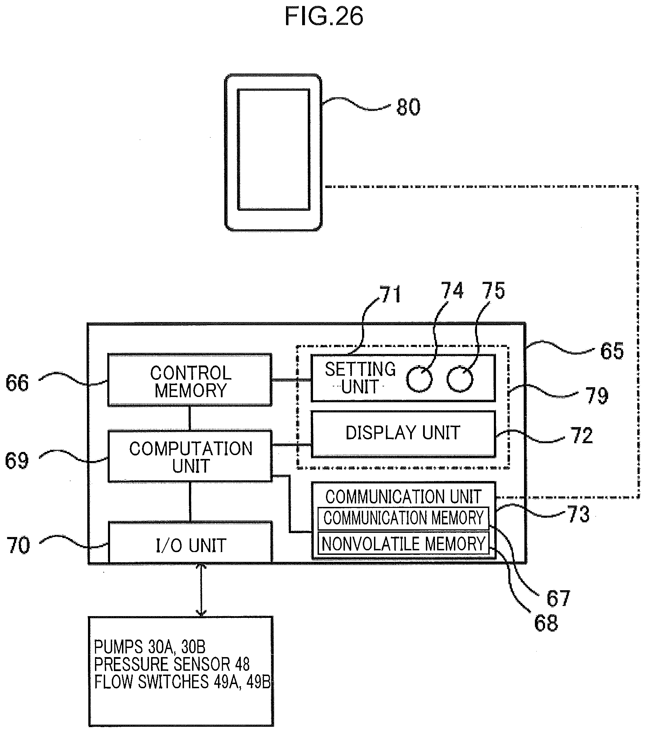

Fig. 26 is a schematic block diagram showing an example of the control unit. As illustrated, the control unit 65 includes a control memory 66, a communication memory 67, a nonvolatile memory 68, a computation unit 69, an I/O unit (an input unit and an output unit) 70, a setting unit 71, a display unit 72, and a communication unit 73. The setting unit 71 and the display unit 72 are provided on an operation panel 79 of the water supply apparatus 10. Further, the communication memory 67 and the nonvolatile memory 68 are included in the communication unit 73. However, without being limited to this example, the communication unit 73, the communication memory 67 and the nonvolatile memory 68 may be configured separately, for example.

Further, as shown in Fig. 25, the control unit 65 may be provided on a separate substrate from the communication unit 73. In this case, the control unit 65 and the communication unit 73 are connected by serial communication, a signal line or the like. It is allowed to adopt a configuration in which the control memory 66 and the nonvolatile memory 68 are disposed in the control unit 65 and the communication memory 67 is disposed in the communication unit 73, or it is allowed to adopt a configuration in which the control memory 66 is disposed in the control unit 65 and the communication memory 67 and the nonvolatile memory 68 are disposed in the communication unit 73. In the case where the control unit 65 and the communication unit 73 are provided on separate substrates, the communication unit 73 may be configured in a remote monitoring device that is installed in a place distant from the water supply apparatus 10 (for example, a building manager room, a remote monitoring room or the like) and that is connected with the control unit 65 by serial communication, a signal line or the like. Alternatively, it is allowed to adopt a configuration in which the control memory 66 and the nonvolatile memory 68 are disposed in the control unit 65 and the communication memory 67 and a nonvolatile memory (not illustrated) are disposed in the communication unit 73.

The setting unit 71 is used for setting various setting values (setting information) necessary to perform the water supply by external operation. The various setting values set in the setting unit 71 are stored in the control memory 66, and further, are stored in the nonvolatile memory 68. As an example, the user can input a stop pressure, a start pressure, and other information necessary for control, as the setting information, through the setting unit 71. Further, in the embodiment, the setting information contains change restriction information for restricting the change in the setting information by the external display device 80. When the change in the setting information is prohibited by the change restriction information, the external display device 80 cannot change the setting information. In this case, the external display device 80 is permitted to change the setting information when the change restriction information is changed through the setting unit 71. Further, in the embodiment, the setting unit 71 includes a reset button 74 and a clear button 75. When the clear button 75 is pressed, the control unit 65 clears only a warning display and the like of the display contents on the display unit 72. Further, when the reset button 74 is pressed, the control unit 65 resets the data including abnormality information and maintenance information (for example, the operation time, the number of start times, the use period of a consumable component, and the failure history).

The display unit 72 functions as a user interface, and displays a variety of data such as the setting values stored in the control memory 66 or the communication memory 67, and the current operation condition (operation information) of the pumps 30A, 30B, for example, the operation or stop, operation frequency, electric current, suction-side pressure and discharge-side pressure of each of the pumps 30A, 30B, the trip of each inverter to drive the motor units 33A, 33B, a suction-side pressure drop warning, a water tank warning, and the like.

As the nonvolatile memory 68, a memory such as a ROM, a HDD, an EEPROM, a FeRAM and a flash memory is used. In the nonvolatile memory 68, a control program for controlling the water supply apparatus 10, the apparatus information of the water supply apparatus 10, the failure history, the operation history, the setting information input through the setting unit 71, and the like are stored. Here, the apparatus information of the water supply apparatus 10 contains at least one of the number of pumps, the pump bore, the pump output, the water supply system, the machine type name of the water supply apparatus and the like, and may be stored in the nonvolatile memory 68 at the factory in advance, or may be stored by a working member when the water supply apparatus 10 is installed. Here, in place of the pump output, the capacity of the motor units 33A, 33B, the capacity of the inverters for driving the motor units 33A, 33B, and the like may be used. Further, in the nonvolatile memory 68, the failure history is stored at the time of the occurrence of the failure, and the information of the operation history of the water supply apparatus 10 and the like is also stored periodically.

The apparatus information of the water supply apparatus 10 is determined depending on the configuration of the water supply apparatus, and therefore, when an improper setting is performed, there is a fear that the water supply cannot be normally performed. Therefore, in the embodiment, the apparatus information stored in the nonvolatile memory 68 cannot be changed by the command from the external display device 80 and the operation of the setting unit 71. Alternatively, an authority is provided by a password or the like, and the apparatus information can be changed only by a user who has the authority of the change in the apparatus information.

As the control memory 66 and the communication memory 67, a volatile memory such as a RAM is used. Further, a memory other than a volatile memory may be used, if the access time for data reading and writing of the memory is so short that there is no problem in the control program of the water supply apparatus 10. The information for performing the operation control of the water supply apparatus 10 is stored in the control memory 66, and the data to be sent and received for the external display device 80 and the like is stored in the communication memory 67. Here, the control memory 66 and the communication memory 67 may be constituted by separate circuit substrates or circuit elements, or may be virtually separated on a single circuit substrate or circuit element. When the power of the water supply apparatus 10 is turned on, the control unit 65 reads the apparatus information and setting information stored in the nonvolatile memory 68, and stores necessary information in the control memory 66. In the control memory 66, a variety of data, for example, the data (the operation time, the integrated value and the like) of the computation result in the computation unit 69, the pressure value (the suction-side pressure and the discharge-side pressure), the setting data input through the setting unit 71, the data input through the I/O unit 70 or output through the I/O unit 70, and the like, is stored.

As the I/O unit 70, a port or the like is used. The I/O unit 70 receives an input signal from the pressure sensor 48, signals from the flow switches 49A, 49B, and the like, and sends the signals to the computation unit 69. As the computation unit 69, a CPU is used. The computation unit 69 performs the setting of a variety of data for operating the pumps 30A, 30B, clocking, computation and the like, based on the program and a variety of data stored in the control memory 66 and the signals input from the I/O unit 70. The output from the computation unit 69 is input to the I/O unit 70.

Further, the I/O unit 70 and the inverters to drive the pumps 30A, 30B are connected with each other by communication means such as RS422, RS232C and RS485. From the I/O unit 70 to the pumps 30A, 30B, a variety of setting values, a frequency command value, and control signals such as a start-stop signal (operation/stop signal) are sent through the inverters. From the pumps 30A, 30B to the I/O unit 70, the operation condition (operation information) such as the actual frequency value and electric current value is successively sent through the inverters.

Incidentally, analog signals and/or digital signals can be used as the control signals to be sent and received between the I/O unit 70 and the inverters to drive the pumps 30A, 30B. For example, analog signals can be used for rotational frequency and the like, and digital signals can be used for an operation stop command and the like. Further, in the case where the variable speed control of the pumps 30A, 30B is not performed, the inverters may be excluded.

The communication unit 73 is configured to be able to communicate with the external display device 80 by wire communication or wireless communication. As the wireless communication, for example, the near field communication (NFC) technology can be used. Further, an arbitrary wireless communication technique such as Bluetooth (R) and Wi-Fi can be used. However, NFC has an advantage in that the communication can be completed simply by making the external display device 80 close to the control unit 65. Further, as the wire communication, for example, the communication may be performed by providing an external connection terminal such as a USB (Universal Serial Bus) in the control unit 65 and connecting the external display device 80 to the external connection terminal, or a serial communication such as RS422, RS232C and RS485 may be used.

In the embodiment, as the display unit 72, it is possible to employ a simple display device such as a seven-segment LED and an indication light. Further, as the external display device 80, it is possible to employ a sophisticated display device with a liquid crystal screen using a touch input technique and a press button technique. In this case, it is possible to display simple information on the display unit 72, and it is possible to display a large amount of information on the external display device 80. By such a configuration, the information about the condition of the operation of the pumps 30A, 30B by the control unit 65 and the like (for example, the target pressure SV, the current pressure PV, the operation/stop of the pumps 30A, 30B, the frequencies of the pumps 30A, 30B, and the like) are displayed on a single screen of the external display device 80. Thereby, even a user inexperienced in the water supply apparatus can recognize the state of the water supply apparatus 10, and can perform the setting change, with no misunderstanding. Further, the water supply apparatus 10 is sometimes installed in an electrically noisy environment such as a machine room or a pump room. In preparation for that case, as the display unit 72, it is allowed to use a display device constituted by a seven-segment LED, an indication light, a mechanical press button and the like, which are more resistant to electric noise than a liquid crystal display or a touch panel. Thereby, even when the electric noise generated from the external environment causes an abnormality in the liquid crystal display or touch panel operation on the external display device 80, it is possible to perform, on the display unit 72, the minimum display and operation necessary for the operation of the water supply apparatus 10. Accordingly, the water supply apparatus 10 can be installed even in an electrically noisy environment.

Furthermore, in the case of employing a versatile terminal device such as a smartphone, a mobile phone, a personal computer or a tablet computer as the external display device 80, it is allowed to install, in the device, a dedicated application software program for making the device serve as the external display device 80. In this case, multiple dedicated application software programs may be prepared in accordance with the level or purpose of the user.

Incidentally, it is allowed to provide only the external display device (sophisticated display device) 80 without providing the operation panel 79 (display unit 72) in the control unit 65. In this case, the external display device 80 is configured to be able to perform all the above-described functions of the operation panel 79. It is unnecessary to provide the display device itself in the water supply apparatus 10, and therefore, it is possible to further reduce the total cost of the water supply apparatus 10. Further, it is allowed that the setting unit 71 of the operation panel 79 does not include the reset button 74 and the clear button 75 and instead the external display device 80 includes a reset button (not illustrated) or a clear button (not illustrated). When the clear button on the external display device 80 is pressed, the display contents displayed on the external display device 80 are erased.

Next, the control of the water supply apparatus 10 by the control unit 65 will be described. When the discharge-side pressure decreases to a predetermined start pressure in the stop state of the pumps 30A, 30B., the control unit 65 starts at least one of the pumps 30A, 30B. Specifically, the control unit 65 outputs a command to start the drive of the pumps 30A, 30B, to the motor units 33A, 33B (to the inverters, in the case of including the inverters). During the operation of the pumps 30A, 30B, a control such as an estimated terminal pressure keeping control or a target pressure keeping control is performed at a pressure (setting pressure) that is set. Specifically, in the case of the estimated terminal pressure keeping control, the target pressure (SV) is set using the rotation speed of the pumps 30A, 30B and a target pressure control curve, and in the case of the target pressure keeping control, the target pressure (SV) is set to the setting pressure. Further, the current pressure (PV) is set to the discharge-side pressure. Then, the PID operation is performed with the deviation between the SV and the PV, and a command rotation speed of the pumps 30A, 30B is set. Incidentally, in the case where the estimated terminal pressure keeping control is performed in the direct coupled water supply, the target pressure control curve may be corrected based on the suction-side pressure. Specifically, the suction-side pressure is added in the target pressure control curve, and the target pressure (SV) is calculated. Further, when multiple pumps are included as in the case of the embodiment, the control unit 65 also performs the control of the number of pumps depending on water quantity, in the number of pumps that can be activated concurrently (parallel operation pump number).

When the use of water in the building decreases during the operation of the pumps 30A, 30B, the flow switches 49A, 49B detect the minute water quantity, and send the detection signal to the control unit 65. In response to the detection signal, the control unit 65 outputs a command to the pumps 30A, 30B, to increase the rotation speed of the pumps 30A, 30B until the discharge-side pressure reaches a predetermined operation stop pressure and stop the pumps 30A, 30B (small water quantity stop) after the accumulation in the pressure tank 50. When water is used again in the building after the small water quantity stop of the pumps 30A, 30B, the discharge-side pressure decreases to the start pressure or lower, and the pumps 30A, 30B are started. Incidentally, when there are multiple pumps as in the case of the embodiment, it is preferable to perform the rotation of the pumps 30A, 30B to be started, and prevent water from being retained in the pumps 30A, 30B. Further, as the method for detecting the small water quantity, other means such as the low load or shutoff pressure with the electric current values of the motor units 33A, 33B may be used, instead of the use of the flow switches 49A, 49B.

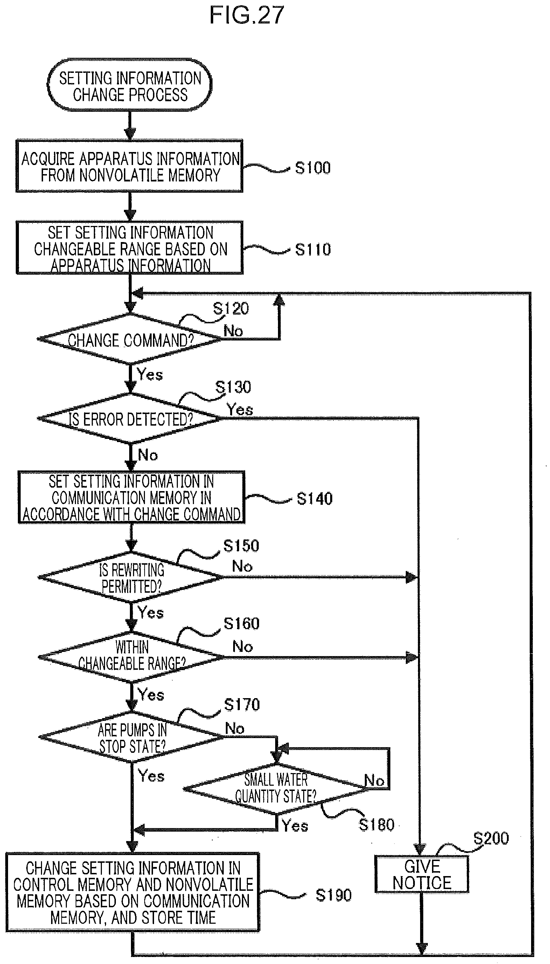

Fig. 27 is a flowchart showing an exemplary setting information change process that is executed by the control unit. The control unit 65 in the embodiment can receive a change command for the setting information from the external display device 80, and judges whether to change the setting information stored in the nonvolatile memory 68 by the setting information change process. The setting information change process in the embodiment is always executed while the water supply apparatus 10 is powered on. However, without being limited to this example, the setting information change process may be executed only when the water supply apparatus 10 receives the change command for the setting information from the external display device 80, for example.

When the setting information change process is started, the control unit 65, first, reads the apparatus information stored in the nonvolatile memory 68, and stores the apparatus information in the control memory 66 (step S100). In the embodiment, the process of step S100 is performed when the power of the water supply apparatus 10 is turned on, and thereafter, the control unit 65 refers to the apparatus information stored in the control memory 66. Incidentally, when the power of the water supply apparatus 10 is turned on, the control unit 65 in the embodiment, for executing the above control of the pumps 30A, 30B, reads the setting information stored in the nonvolatile memory 68, together with the apparatus information, and stores the setting information in the control memory 66.

Subsequently, based on the apparatus information stored in the control memory 66, the control unit 65 sets whether to change the setting information and/or the changeable range of the setting information (step S110). The changeable range means a range in which the change in the setting information is permitted. For example, in the case where the setting information is a numerical value (setting value), the changeable range may be at least one of an upper limit and a lower limit that are permitted as the setting value. Further, the changeable range may be the upper limit of a change amount in which the change is permitted from a currently stored setting value. Further, in the case where the setting information is a character string, a symbol or the like, the changeable range may be a list that is recognized as the setting information. As a specific example, the control unit 65 refers to a map, a relational expression, a correction coefficient or the like that is previously defined as the relation between the apparatus information and the changeable range, and using this and the apparatus information, sets the changeable range of the setting information.

In the embodiment, the control unit 65 sets the upper limit of the parallel operation pump number, using the pump number information of the apparatus information. The parallel operation pump number is the number of pumps that are operated at the time of the maximum flow. This is because the number of pumps that are operated at the time of the maximum water quantity is sometimes different from the number of pumps of the water supply apparatus 10. In the case where the water supply apparatus 10 has a spare pump in preparation for a pump failure, a facility including power supply capacity is designed based on a capacity for the case where the spare pump is excluded. Therefore, the parallel operation pump number can be smaller than the number of pumps, but the parallel operation pump number cannot be larger than the number of pumps. Accordingly, the upper limit of the parallel operation pump number is a value equal to the number of pumps. Further, in the case where the parallel operation pump number is one, the pumps 30A, 30B performs only an isolated alternate operation, and does not perform an additional parallel-off of the operation pump. Therefore, the change in the setting value about the additional parallel-off may be prohibited.

Further, the I/O unit 70 sometimes includes multiple DO terminals (not illustrated) for the contact output of the state (the operation, the failure and the like) of each pump to the exterior. For the output signal of the DO terminal, the pump as the output object and the state to be output may be changed by the setting change from the external display device 80. In this case, using the pump number of the apparatus information, the control unit 65 provides the restriction of the setting value such that the outputs of the states of the pump number or more of pumps cannot be set as the DO outputs. Thereby, it is possible to prevent an unintended signal from being output from the DO.

The control unit 65 may set the restriction of the upper and lower limits of the setting pressure, using the pump bore value and pump output value of the apparatus information or the machine-type identification information indicating the configuration of the water supply apparatus. The upper and lower limits of the setting pressure are determined by a selection curve (Q-H curve) specific to the pump. Therefore, it is possible to previously store, in the nonvolatile memory, the upper and lower limits of a selection curve for each pump that are obtained from the bore and output of the pump or the machine-type identification information indicating the configuration of the water supply apparatus.

The control unit 65 may set the restriction of the upper and lower limits of the stall current value of the inverters, using the pump output value of the apparatus information. In the water supply apparatus 10, there are sometimes used inverters having a larger current capacity than the output of the motors 33A, 33B, which are the driving sources of the pumps 31A, 31B. In this case, when a large current of the rated current or larger flows through the motors 33A, 33B, there is a possibility that the coils of the motors 33A, 33B burn out due to the overcurrent, so that the pumps 31A, 31B cannot be driven and the water cannot be supplied. Therefore, it is necessary to set the stall current value of the inverters and perform the current restriction. The output of the pumps is proportional to the related current of the motors 33A, 33B, and therefore, the upper and lower limits of the stall current value of the inverters can be determined for each output value of the pumps.

In the case where the water supply system of the apparatus information is a water tank system, the control unit 65 permits the setting change relevant to the water tank. The setting for the water tank includes the setting of a one-vessel type, a two-vessel type or a no-vessel type (the water level in the water tank is not detected) of the water tank, and the settings of the number of electrode bars that measure the water level in the water tank and an electrode that detects water fullness, water reduction and water shortage. The restriction of the input value is set such that such settings are normally performed. Further, it is allowed to select whether to detect a warning for each of the water fullness, water reduction and water shortage of the water tank.

In the case where a direct coupling system is selected as the water supply system of the apparatus information, the control unit 65 permits the setting of a detection value and a resetting value for the decrease in the suction-side pressure. The restriction of the setting range is set, for example, such that the upper limit of the detection value for the decrease in the suction-side pressure is the resetting value and the lower limit of the resetting value for the decrease in the suction-side pressure is the detection value. As an example, the detection value for the decrease in the suction-side pressure is 7 m or less, and the restoration value is 10 m or more. The decrease in the suction-side pressure means the decrease in the pressure of the water main, and it is necessary to stop the pumps 30A, 30B until the pressure of the water main is sufficiently restored. Therefore, it is necessary to set a differential between the detection value and the restoration value.

In the case where a high position water tank system is selected as the water supply system of the apparatus information, the control unit 65 permits the setting relevant to the high position water tank. The setting relevant to the high position water tank includes the settings of the number of electrode bars that measure the water level in the high position water tank and an electrode that detects water fullness and water reduction, the setting of an electrode that detects the start/stop of the pump, and the setting of an electrode that detects the opening/closing of an electromagnetic valve or motor-operated valve provided in a pipe between the water supply apparatus 10 and the high position water tank.
The restriction of the input value is set such that such settings are normally performed. Further, it is allowed to select whether to detect a warning for each of the water fullness and water reduction of the high position water tank.

Thus, the changeable range of the setting information is set based on the apparatus information, and thereby, it is possible to set the changeable range appropriate to each water supply apparatus, without storing the changeable range individually for each of multiple water supply apparatuses. Thereby, it is possible to set the changeable range of the setting information, using an identical setting information change process for water supply apparatuses that are different in the apparatus information, and it is possible to actualize a control process with a high versatility.

Furthermore, by reference to the value of another setting item, the changeable range may be at least one of the upper limit and lower limit of the permitted setting value. As an example, the upper limit of the start pressure is adopted as the setting value of the stop pressure, and the lower limit of the stop pressure is adopted as the setting value of the stop pressure. If the start pressure is higher than the stop pressure, the pumps 30A, 30B repeat the activation and the stop. Then, the number of start-stop times of the pumps 31A, 31B is increased, and the bearing or the shaft is damaged. In the worst case, the pumps 31A, 31B cannot pump water, resulting in the water stoppage of the water supply apparatus 10. Therefore, the input restriction is set such that the setting values of the start pressure and stop pressure are normally set, leading to the effect of reducing the activation frequencies of the pumps 31A, 31B and lengthening the lifetimes.

Next, the control unit 65 waits until receiving a change command for the setting information from the external display device 80 (step S120), and performs the error detection for the received change command (step S130) when receiving the change command (S120; Yes). The error detection is a process of judging whether the change command complies with a previously determined encoding rule, and examples thereof include a judgment using a parity bit, a checksum or the like. In the case where an error is detected in the received change command (S130; Yes), the control unit 65 judges that the change command is not a proper command, or that the command has not been properly received due to communication disturbance or the like. In this case, the control unit 65 executes a process of giving a notice to the user (step S200), and returns to the process of step S120.
The notice by the control unit 65 may be given by the display on the display unit 72, may be given by the generation of an error sound or the like from a buzzer (not illustrated) or the like, or may be given by the contact output from the I/O unit 70 to the exterior. Further, the control unit 65 may give a notice that the control unit 65 does not change the setting information because of the detection of an error in the change command. By such a notice, the user can recognize that the setting information has not been changed although the change command has been sent to the water supply apparatus 10 by the operation of the external display device 80. Further, instead of or in addition to the notice by the water supply apparatus 10 itself, as exemplified by the notice by the display unit 72, the notice by the control unit 65 may be given, using the external display device 80. That is, the control unit 65 may communicate the notice information with the external display device 80 through the communication unit 73, and the external display device 80, after receiving the information, may give the notice to the user by screen display or the like.

In the case where no error is detected in the change command (S130; No), the control unit 65 judges that the control unit 65 has received a proper change command, and stores the setting information in the communication memory 67 in accordance with the received change command (step S140). As described above, the communication memory 67 is a memory in which the data through communication is stored, and the setting information to be used for control is not changed by the process of step S140.

Subsequently, the control unit 65 refers to the change restriction information of the setting information stored in the control memory 66, and judges whether the rewriting of the setting information by the external display device 80 is permitted (step S150). In the case where the rewriting of the setting information by the external display device 80 is prohibited (S150; No), the control unit 65 executes the process of giving a notice to the user (S200), and returns to the process of step S120. In this case, the control unit 65 may give a notice that the rewriting of the setting information by the external display device 80 is prohibited by the change restriction information. Thereby, it is possible to prompt the change in the change restriction information by the operation of the setting unit 71. Further, by the use of such change restriction information, it is possible to prevent an unrighteous change in the setting information by a third person and a change in the setting information due to an incorrect operation. However, the setting information does not need to contain such change restriction information. Further, instead of the change restriction information, a button for permitting/prohibiting the rewriting of the setting information, or the like may be provided on the operation panel 79. Further, the change restriction information may be provided individually for each setting value.

In the case where the rewriting of the setting information by the external display device 80 is permitted (S150; Yes), the control unit 65 judges whether the change in the setting information by the change command is within the changeable range set in the process of step S110 (step S160). For example, in the case where an upper limit (a lower limit) is set as the changeable range, the control unit 65, in the process of step S160, judges that the change in the setting information is within the changeable range, when the new setting information is equal to or less than the upper limit (equal to or more than the lower limit). On the other hand, the control unit 65 judges that the change in the setting information is beyond the changeable range, when the new setting information is more than the upper limit (less than the lower limit). Further, in the case where the upper limit of a change amount is set as the changeable range, the control unit 65 judges that the change in the setting information is within the changeable range, when the difference between the current setting information and the changed value is equal to or less than the upper limit of the change amount. On the other hand, the control unit 65 judges that the change in the setting information is beyond the changeable range, when the difference between the current setting information and the changed value is more than the change amount. Furthermore, in the case where a list is set as the changeable range, the control unit 65 judges that the change in the setting information is within the changeable range, when the new setting information is included in the list. On the other hand, the control unit 65 judges that the change in the setting information is beyond the changeable range, when the new setting information is not included in the list.

In the case where the change in the setting information is beyond the changeable range (S160; No), the control unit 65 judges that the control unit 65 cannot accept the change in the setting information, executes the process of giving a notice to the user (S200), and returns to the process of step S120. In this case, the control unit 65 may give a notice that the change in the setting information is beyond the changeable range. Thus, in the case where the change in the setting information is beyond the changeable range, the setting information is not changed, and thereby, it is possible to prevent the malfunction of the apparatus due to the update of the setting information to unintended information. Moreover, in the embodiment, since the changeable range is set based on the apparatus information, it is possible to change the setting information of the water supply apparatus 10 within a range appropriate to the apparatus information.

In the case where the change in the setting information is within the changeable range (S160; Yes), the control unit 65 judges that the control unit 65 can accept the change in the setting information, and judges whether both of the pumps 30A, 30B are in the stop state (step S170). This is because the change in the setting information during the operation of the pumps 30A, 30B is likely to cause a great change in the command values for the pumps 30A, 30B, which are controlled based on the setting information. Therefore, in the embodiment, the setting information is changed, when both of the pumps 30A, 30B are in the stop state, or when the pumps 30A, 30B are operating but are in a small water quantity state in which the flow switches 49A, 49B detect small water quantities.

In the case where at least one of the pumps 30A, 30B is operating (step S170; No), the control unit 65 waits for the discharge water quantities from the pumps 30A, 30B to become small water quantities based on the detection values from the flow switches 49A, 49B (step S180). Then, in the case where both of the pumps 30A, 30B are in the stop state (S170; Yes) or where the discharge water quantities from the pumps 30 are small water quantities (S180; Yes), the control unit 65 judges that the setting information may be changed. In this case, the control unit 65 stores the setting information stored in the communication memory 67 and the time, in each of the control memory 66 and the nonvolatile memory 68 (step S190), and returns to the process of step S120 again. By this process, the setting information to be used for control is changed. In the embodiment, the control unit 65 also stores the time, when changing the setting information stored in the control memory 66 and the nonvolatile memory 68. This time may be the time when the change command is received, or may be the time when the setting information in the nonvolatile memory 68 is changed. By storing the time in this way, it is possible to check the situation when the setting information was changed last time, and for example, it is possible to check that the setting information was changed by an incorrect operation or the like. Incidentally, the control unit 65 may store only the last change time, or may store a predetermined number of change times in the past. Further, in the case where the setting information in the nonvolatile memory 68 and the like is changed, the control unit 65 may give the notice by the display on the display unit 72, or may send a signal indicating that the setting information has been changed, from the communication unit 73 to the exterior. Further, the control unit 65 may store the information allowing for the individual identification of the external display device 80 used for the change in the setting information. By the individual identification information, it is possible to identify a user who changed the setting information, allowing for the achievement of security enhancement.

Without being limited to the above embodiment, it is allowed that the control unit 65 does not change the setting information when the pumps 30A, 30B are not in the stop state even if the discharge water quantities from the pumps 30A, 30B are small water quantities. Further, the control unit 65 may change the setting information, regardless of the operation/stop of the pumps 30A, 30B. Furthermore, in the above embodiment, in the case where the pumps 30A, 30B are operating, the control unit 65 waits for the discharge water quantities from the pumps 30A, 30B to become small water quantities, and then, changes the setting information. However, without being limited to this example, in the case where the pumps 30A, 30B are operating, the control unit 65 may reject the change command by the external display device 80, may execute a notice process, and may return to the process of step S120. Further, in the above embodiment, the error detection for the change command is performed, but it is allowed that such error detection is not performed.

### (Modification)

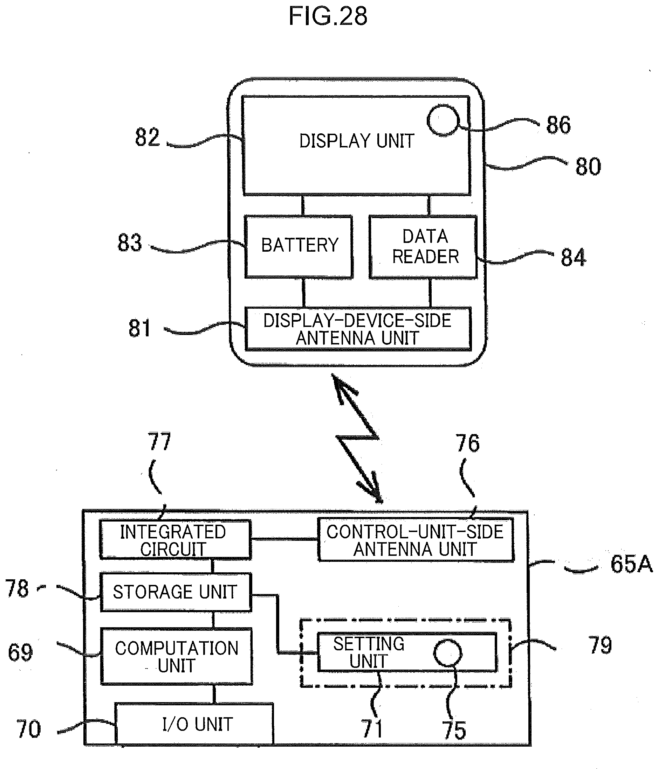

Fig. 28 is a diagram showing a control unit and an external display device in a modification. A control unit 65A in the modification is different from the control unit in the embodiment, in that a control-unit-side antenna unit 76 is included instead of the communication unit 73 and in that an integrated circuit 77 connected with the control-unit-side antenna unit 76 is included. Further, in the example shown in Fig. 28, the control memory 66, communication memory 67 and nonvolatile memory 68 in the embodiment are included in a storage unit 78. The integrated circuit 77 is electrically connected with the storage unit 78. Incidentally, the control unit 65A shown in Fig. 28 does not include the display unit 72, but may include the display unit 72. Further, the control unit 65A in the modification may be provided integrally with another constituent of the water supply apparatus 10, as exemplified by the pumps 30A, 30B, or may be provided as an apparatus for relaying the data of the water supply apparatus 10, separately from the other constituents of the water supply apparatus 10.

The external display device 80 in the modification includes a display-device-side antenna unit 81 to send and receive a radio wave, a display unit 82, a battery 83, and a data reader 84. In the external display device 80, the data received by the display-device-side antenna unit 81 is read by the data reader 84. Then, the data (for example, the target pressure SV, the current pressure PV, the frequencies of the pumps 30A, 30B, and the like) read by the data reader 84 is displayed on the display unit 82. The battery 83 supplies electric power to the display-device-side antenna unit 81, the data reader 84 and the display unit 82.

As the external display device 80, for example, a versatile terminal device such as a smartphone, a mobile phone, a personal computer, a tablet computer may be used, or a dedicated terminal device such as a remote monitoring device may be used. Particularly, by using a versatile terminal device such as a smartphone as the external display device, it is possible to reduce the cost for producing a dedicated display device, and therefore, it is possible to decrease the cost of the water supply apparatus. Further, multiple users can make individual versatile terminal devices display the state of the water supply apparatus 10, and therefore, it is possible to provide display operations according to the levels or purposes of the users. For example, it is possible to inexpensively provide a water supply apparatus that can give the information about the control of the pumps 30A, 30B, and the like, to a user having no special knowledge about the water supply apparatus, as exemplified by a condominium manager and a building manager, in an understandable way.

The external display device 80 is connected with the control unit 65A by the near field communication (NFC) technology. More specifically, when the display-device-side antenna unit 81 generates a radio wave in a state where the external display device 80 is close to the control unit 65A, the control-unit-side antenna unit 76 receives the radio wave, and the control-unit-side antenna unit 76 converts the radio wave into electric power. The electric power, which is supplied to the integrated circuit 77 and the storage unit 78, drives the integrated circuit 77 and the storage unit 78. In the case where the external display device 80 reads the data in the storage unit 78, the integrated circuit 77 reads the data stored in the storage unit 78, based on the communication data contained in the radio wave, and sends the data to the control-unit-side antenna unit 76. Together with the data, the control-unit-side antenna unit 76 sends a radio wave to the display-device-side antenna unit 81. The data reader 84 reads the data received by the display-device-side antenna unit 81, and displays the data on the display unit 82.

Further, in the case where the external display device 80 changes the data in the storage unit 78, the integrated circuit 77 changes the data in the storage unit 78, based on the communication data contained in the radio wave, and sends the data meaning that the data change has been executed, to the control-unit-side antenna unit 76. Together with the data, the control-unit-side antenna unit 76 sends a radio wave to the display-device-side antenna unit 81. The data reader 84 reads the data received by the display-device-side antenna unit 81, and displays the execution of the data change on the display unit 82.

The external display device 80 may include a clear button 86 for erasing the display contents and a reset button (not illustrated) for resetting data. When the user presses the clear button 86, the display contents on the display unit 82 are erased. Further, when the user presses the reset button, a reset signal is sent to the control unit 65A, and the control unit 65A, after receiving the reset signal, resets the data of the maintenance information and the like. The clear button 86 in the embodiment is a virtual button that appears on the screen of the display unit 82, but the clear button 86 may be a mechanical button that is provided outside the display unit 82. The control unit 65A in the modification does not include a reset button, but the control unit 65A may be provided with a clear button and a reset button.

In the modification, the data stored in the storage unit 78 of the control unit 65A is sent from the control unit 65A to the external display device 80 by the wireless communication. According to the modification, even when the water supply apparatus 10 is powered off, the control-unit-side antenna unit 76 can generate electric power, from the radio wave emitted from the external display device 80, and can drive the integrated circuit 77 and the storage unit 78. Accordingly, even when electric power is not supplied to the control unit 65A, for example, during the maintenance of the water supply apparatus 10, the external display device 80 can acquire the data from the storage unit 78 of the control unit 65A to display the data, and can change the data stored in the storage unit 78. Incidentally, in this case, the integrated circuit 77 of the control unit 65A may perform the setting information change process shown in Fig. 27.

NFC is a technology for performing an intercommunication at a near field of several centimeters. In the case where the control unit 65A in the modification is provided integrally with another constituent of the water supply apparatus 10, the user and the maintenance member make the external display device 80 close to the control unit 65A at a distance allowing for the intercommunication, in order to display or change a variety of information on the external display device 80. This means that the user and the maintenance member are close to the water supply apparatus 10 when operating the external display device 80. This leads to the prevention of an unexpected action of the water supply apparatus 10 due to an incorrect operation, for example, the prevention of the pump activation due to the press of the reset button during the replacement work for a consumable component. Further, at a site where multiple water supply apparatuses 10 are installed, it is possible to perform the intercommunication at a distance close to a water supply apparatus 10 intended to be displayed, and therefore, it is possible to prevent an incorrect display or an incorrect operation such as the display or setting change of the state of an unintended different water supply apparatus.

Incidentally, in Fig. 26, the communication unit 73 may communicate with a remote monitoring apparatus (for example, a personal computer, a smartphone or a dedicated monitor) provided in the maintenance company or the building manager room, through a public line, a network, a private line or the like. In this case, the operation information of the pumps and the like are sent from the communication unit 73 to the remote monitoring apparatus. The remote monitoring apparatus may include a display unit that displays the received data. Further, the remote monitoring apparatus may send the data received from the water supply apparatus 10, to the external display device 80. Further, the external display device 80 and the remote monitoring apparatus may send the data received from the water supply apparatus 10, to an external server, and may store the information in the external server. Further, it is allowed to perform the writing of a variety of data from the remote monitoring apparatus, or it is allowed to perform the writing of a variety of data from the external display device to the remote monitoring apparatus and further perform the writing of a variety of data from the remote monitoring apparatus to the water supply apparatus 10.

Further, the apparatus information may contain the machine-type identification information indicating the configuration of the water supply apparatus 10 (for example, the machine type name, the model number and the like). Further, from the machine type name, the control unit 65 may acquire the apparatus information (the information of at least one of the number of pumps, the pump output, the pump bore and the water supply system, for example) of the water supply apparatus 10, using a previously stored correspondence table. On the contrary, the control unit 65 may acquire the machine-type identification information of the water supply apparatus, based on the apparatus information stored in the nonvolatile memory 68. Then, the control unit 65 may display the acquired apparatus information or machine-type identification information on the external display device 80.

Furthermore, the apparatus information may contain a serial number for identifying an individual water supply apparatus 10. Further, the external display device 80 and the remote monitoring apparatus may send the serial number received from the water supply apparatus 10, to external server, and may acquire the apparatus information of the water supply apparatus 10 that is stored in the external server and that corresponds to the serial number (the information of at least one of the number of pumps, the pump output, the pump bore and the water supply system, for example). Then, based on the acquired apparatus information or the machine-type identification information, the data may be displayed on the external display device 80, and furthermore, the setting change for the water supply apparatus 10 may be performed on the external display device 80.

Thus, the present invention is not limited to the above embodiments themselves, and can be embodied by modifying the constituent elements in a range without departing from the spirit, in the implementation phase. Further, various inventions can be configured by appropriate combinations of the multiple constituent elements disclosed in the above embodiments. For example, some constituent elements may be excluded from all the constituent elements shown in the embodiments. Furthermore, constituent elements may be appropriately combined across different embodiments.

### Reference Signs List

1, 1-1, ..., 1-M: terminal apparatus
11: storage unit
12: memory
13: input unit
14: display unit
15: CPU
16: first communication unit
17: second communication unit
2: information processing apparatus (enterprise information processing apparatus)
21: storage unit
22: memory
23: input unit
24: display unit
25: communication unit
26: CPU
3: storage apparatus (enterprise storage apparatus)
CN: mobile phone line network
LN: local network
P, P-1, P-2, P-3, ..., P-(N-2), P-(N-1), P-N: pump apparatus
AC: commercial power source
101: motor
102: pump
103: motor control unit
104: interface (I/F)
105: current measuring instrument
106: temperature measuring instrument (temperature sensor)
107: transformer
108: CPU
109: memory
110: communication module
111: antenna
10: water supply apparatus
20: base
30A, 30B: pump
40: discharge pipe
45: coupling pipe
48: pressure sensor
50: pressure tank
60: control panel
65, 65A: control unit
66: control memory
67: communication memory
68: nonvolatile memory
69: computation unit
70: I/O unit
71: setting unit
72: display unit
73: communication unit
76: control-unit-side antenna unit
77: integrated circuit
78: storage unit
79: operation panel
80: external display device

## Claims

1. An information processing system comprising:
a terminal apparatus that receives machine-type identification information identifying a machine type of a monitoring target apparatus and state history information indicating a history of a state of the monitoring target apparatus, from the monitoring target apparatus of a user by near field communication, and that sends the received machine-type identification information and state history information;
an enterprise information processing apparatus that receives the machine-type identification information and the state history information from the terminal apparatus; and
an enterprise storage apparatus that accumulates machine-type identification information identifying a machine type of a monitoring target apparatus and normal-state history information in an associated manner, the normal-state history information being the state history information when the machine type is in a normal state,
wherein, when the enterprise information processing apparatus receives the machine-type identification information and state history information about a certain monitoring target apparatus from the terminal apparatus, the enterprise information processing apparatus compares the normal-state history information accumulated in the enterprise storage apparatus in association with the machine-type identification information and the received state history information, judges whether an operation state of the monitoring target apparatus is normal, and sends a judgment result to the terminal apparatus, and
the terminal apparatus receives the judgment result from the enterprise information processing apparatus, and displays the received judgment result.

2. The information processing system according to claim 1,
wherein, when the enterprise information processing apparatus judges that the operation state of the monitoring target apparatus is normal, the enterprise information processing apparatus stores the state history information in the enterprise storage apparatus, as the normal-state history information, in association with the machine-type identification information.

3. The information processing system according to claim 1 or 2,
wherein the state history information contains operation-state history information indicating a history of the operation state of the monitoring target apparatus.

4. The information processing system according to any one of claims 1 to 3,
wherein the state history information contains measurement-value history information indicating a history of a measurement value that is measured by a measuring instrument provided in the monitoring target apparatus.

5. The information processing system according to any one of claims 1 to 4,
wherein the enterprise storage apparatus, for each failure event, accumulates the state history information about the monitoring target apparatus before failure occurrence,
the enterprise information processing apparatus, for each failure event, statistically processes the state history information before the failure occurrence accumulated in the enterprise storage apparatus, and determines a state change characteristic of before the failure occurrence, and
the enterprise information processing apparatus compares the state history information about the certain monitoring target apparatus and the normal-state history information about the same machine type as the monitoring target apparatus stored in the enterprise storage apparatus, and judges whether the state change characteristic of before the failure occurrence is in the state history information about the certain monitoring target apparatus.

6. The information processing system according to claim 5,
wherein the enterprise information processing apparatus sends information about the state change characteristic of before the failure occurrence and/or information about the failure event, to the terminal apparatus, and
the terminal apparatus receives and displays the information about the state change characteristic of before the failure occurrence and/or the information about the failure event.

7. The information processing system according to claim 5 or 6,
wherein, in the enterprise storage apparatus, the machine-type identification information, the state change characteristic of before the failure occurrence, a repair work content and/or a replacement-needed component are stored in an associated manner, for each machine type of the monitoring target apparatus,
the enterprise information processing apparatus refers to the enterprise storage apparatus, extracts the repair work content and/or the replacement-needed component associated with the determined state change characteristic of before the failure occurrence and the machine-type identification information identifying the machine type of the monitoring target apparatus, from the enterprise storage apparatus, and sends information about the repair work content and/or the replacement-needed component, to the terminal apparatus, and
the terminal apparatus receives the repair work content and/or the replacement-needed component from the enterprise information processing apparatus, and displays the repair work content and/or the replacement-needed component.

8. The information processing system according to claim 5 or 6,
wherein, in the enterprise storage apparatus, for each failure component, failure component identification information identifying the failure component and a work item for the failure component are stored in an associated manner,
the terminal apparatus accepts an input of the failure component of the failed monitoring target apparatus, from an operator, and sends the failure component identification information identifying the accepted failure component,
the enterprise information processing apparatus acquires the work item corresponding to the received failure component identification information by referring to the enterprise storage apparatus, extracts the state change characteristic of before the failure occurrence, from the state history information before the failure occurrence of the monitoring target apparatus, determines a discrimination condition for discriminating whether the extracted state change is normal, and sends the state change, the discrimination condition and the work item to the terminal apparatus, and
the terminal apparatus receives the state change, the discrimination condition and the work item from the enterprise information processing apparatus, accumulates the state change, the discrimination condition and the work item in an associated manner, judges whether the accumulated state change for certain state history information satisfies the corresponding discrimination condition, when the terminal apparatus receives a certain state history information from a certain monitoring target apparatus, and displays the work item corresponding to a combination of the state change and the discrimination condition, when the discrimination condition is satisfied.

9. The information processing system according to claim 8,
wherein the enterprise information processing apparatus extracts the state history information in which the extracted state change is found, from multiple pieces of the state history information about the same machine type that failed in the past, and determines the discrimination condition, using the extracted state history information.

10. An information processing method that refers to an enterprise storage apparatus, the enterprise storage apparatus accumulating machine-type identification information identifying a machine type of a monitoring target apparatus and normal-state history information in an associated manner, the normal-state history information being state history information when the machine type is in a normal state,
the information processing method comprising:
a step in which a terminal apparatus receives the machine-type identification information identifying the machine type of the monitoring target apparatus and the state history information indicating a history of a state of the monitoring target apparatus, from the monitoring target apparatus of a user by near field communication, and sends the received machine-type identification information and state history information;
a step in which, when an enterprise information processing apparatus receives the machine-type identification information and state history information about a certain monitoring target apparatus from the terminal apparatus, the enterprise information processing apparatus compares the normal-state history information accumulated in the enterprise storage apparatus in association with the machine-type identification information and the received state history information, judges whether an operation state of the monitoring target apparatus is normal, and sends a judgment result to the terminal apparatus; and
a step in which the terminal apparatus receives the judgment result from the enterprise information processing apparatus, and displays the received judgment result.

11. An information processing apparatus comprising:
a communication unit that receives machine-type identification information identifying a machine type of a monitoring target apparatus and state history information indicating a history of a state of the monitoring target apparatus, from a terminal apparatus; and
a processor that, when the communication unit receives the machine-type identification information and state history information about a certain monitoring target apparatus, compares a normal-state history information accumulated in the enterprise storage apparatus in association with the machine-type identification information and the received state history information, judging whether an operation state of the monitoring target apparatus is normal, and executes a process for sending a judgment result to the terminal apparatus.

12. A terminal apparatus that can refer to a storage apparatus, the storage apparatus accumulating machine-type identification information identifying a machine type of a monitoring target apparatus and normal-state history information in an associated manner, the normal-state history information being state history information when the machine type is in a normal state,
the terminal apparatus comprising:
a communication unit that receives the machine-type identification information identifying the machine type of the monitoring target apparatus and the state history information indicating a history of a state of the monitoring target apparatus, from the monitoring target apparatus of a user by near field communication;
a processor that, in the case of receiving the machine-type identification information and state history information about a certain monitoring target apparatus from the monitoring target apparatus, compares the normal-state history information accumulated in the storage apparatus in association with the machine-type identification information and the received state history information, and judges whether an operation state of the monitoring target apparatus is normal; and
a display unit that displays a judgment result obtained by the judgment of the processor.

13. A water supply apparatus that supplies water to a water supply object,
the water supply apparatus comprising:
at least one pump that transfers the water; and
a control unit that controls the pump,
wherein the control unit includes a nonvolatile memory, an input unit to which operation information about an operation state of the pump is input, and a communication unit configured to communicate display information with the exterior, the display information being displayed on an external display device,
apparatus information is stored in the nonvolatile memory, the apparatus information containing at least one of the number of the pumps, a water supply system, and machine-type identification information indicating a configuration of the water supply apparatus, and
the control unit sets the display information based on the apparatus information stored in the nonvolatile memory and the operation information input to the input unit, and
communicates the display information with the exterior through the communication unit.

14. The water supply apparatus according to claim 13,
wherein the display information contains information about each operation state of a predetermined number of pumps, and
the control unit sets the display information based on the operation information input to the input unit, for pumps that are of the predetermined number of pumps and that are recognized based on the apparatus information, and
sets the display information to information indicating nonexistence of pumps, for the remaining pumps.

15. The water supply apparatus according to claim 13 or 14,
wherein the control unit sets a suction-side pressure of the pump as the display information, based on the operation information input to the input unit, when the water supply system is recognized as a direct coupled water supply system based on the apparatus information.

16. The water supply apparatus according to any one of claims 13 to 15,
wherein the control unit discriminates the machine-type identification information based on the apparatus information stored in the nonvolatile memory, and sets the discriminated machine-type identification information as the display information.

17. The water supply apparatus according to any one of claims 13 to 16,
wherein the display information contains at least one of an operation/stop state of the pump, a rotation speed of the pump, an integrated operation time of the pump, the number of times of operation of the pump, a discharge-side pressure of the pump, a suction-side pressure of the pump, and setting information that set by a user and that is used for controlling the pump.

18. The water supply apparatus according to any one of claims 13 to 17,
wherein the control unit includes a memory separately from the nonvolatile memory, and stores, in the memory, the apparatus information stored in the nonvolatile memory, at the time of activation of the water supply apparatus.

19. The water supply apparatus according to any one of claims 13 to 18,
wherein the communication unit directly sends the display information to the external display device, or sends the display information to a remote monitoring device to send the display information to the external display device through the remote monitoring device.

20. The water supply apparatus according to any one of claims 13 to 19, further comprising a display unit that displays at least a part of the operation information.

21. The water supply apparatus according to any one of claims 13 to 20,
wherein the communication unit is a control-unit-side antenna unit that receives a radio wave from the external display device and that converts the received radio wave into electric power.

22. The water supply apparatus according to any one of claims 13 to 21,
wherein the communication unit sends the display information to the exterior by near field communication (NFC) .

23. A control method for a water supply apparatus, comprising:
a step of storing apparatus information in a nonvolatile memory included in the water supply apparatus, the apparatus information containing at least one of the number of pumps of the water supply apparatus, a water supply system, and machine-type identification information of the water supply apparatus;
a step of setting display information for displaying on an external display device based on the apparatus information stored in the nonvolatile memory and operation information about an operation state of the pump; and
a step of sending the set display information from the water supply apparatus to the exterior.

24. A water supply apparatus that supplies water to a water supply object,
the water supply apparatus comprising:
at least one pump that transfers the water; and
a control unit that controls the pump,
wherein the control unit includes a rewritable nonvolatile memory and a communication unit configured to communicate with an external display device,
apparatus information and setting information are stored in the nonvolatile memory, the apparatus information containing at least one of the number of the pumps, a water supply system, and machine-type identification information indicating a configuration of the water supply apparatus, the setting information being set by a user and being used for controlling the pump, and
the control unit sets a changeable range of the setting information based on the apparatus information stored in the nonvolatile memory, and when the control unit receives a change command for the setting information from the external display device, the control unit changes the setting information stored in the nonvolatile memory when a change in the setting information by the change command is in the changeable range, and does not change the setting information stored in the nonvolatile memory when the change in the setting information by the change command is beyond the changeable range.

25. The water supply apparatus according to claim 24,
wherein the control unit changes the setting information stored in the nonvolatile memory, when quantity of water to be discharged from the pump is smaller than a predetermined quantity.

26. The water supply apparatus according to claim 24 or 25,
wherein the setting information contains change restriction information indicating a restriction of the change in the setting information, and
when the change restriction information indicates prohibition of the change in the setting information, the control unit does not change the setting information stored in the nonvolatile memory, even when receiving the change command.

27. The water supply apparatus according to any one of claims 24 to 26,
wherein the control unit does not change the setting information stored in the nonvolatile memory, when the change command does not comply with a predetermined encoding rule.

28. The water supply apparatus according to any one of claims 24 to 27,
wherein, when the control unit changes the setting information stored in the nonvolatile memory based on the change command, the control unit stores a time of the change in the setting information or a time of the receiving of the change command, in the nonvolatile memory.

29. The water supply apparatus according to any one of claims 24 to 28,
wherein, when the control unit receives the change command and does not change the setting information stored in the nonvolatile memory, the control unit gives a notice.

30. The water supply apparatus according to any one of claims 24 to 29,
wherein the control unit comprises a main board for controlling the pump, and a communication board on which the communication unit and the nonvolatile memory are provided,
a memory is provided on the main board, separately from the nonvolatile memory, and
the control unit stores, in the memory, the apparatus information stored in the nonvolatile memory, at the time of activation of the water supply apparatus.

31. The water supply apparatus according to any one of claims 24 to 30, further comprising a display unit that displays information about the control of the pump.

32. The water supply apparatus according to any one of claims 24 to 31,
wherein the communication unit sends information about the control of the pump, to the external display device.

33. The water supply apparatus according to any one of claims 24 to 32,
wherein the communication unit is a control-unit-side antenna unit that receives a radio wave from the external display device and that converts the received radio wave into electric power.

34. The water supply apparatus according to any one of claims 24 to 33,
wherein the communication unit communicates with the external display device by near field communication (NFC).

35. A control method for a water supply apparatus that supplies water to a water supply object,
the control method comprising:
a step of storing apparatus information and setting information in a nonvolatile memory included in the water supply apparatus, the apparatus information containing at least one of the number of pumps of the water supply apparatus, a water supply system, and machine-type identification information of the water supply apparatus, the setting information being set by a user and being used for controlling the pump;
a step of setting a changeable range of the setting information based on the apparatus information stored in the nonvolatile memory; and
a step of, when receiving a change command for the setting information from an external display device, changing the setting information stored in the nonvolatile memory when a change in the setting information by the change command is in the changeable range, and not changing the setting information stored in the nonvolatile memory when the change in the setting information by the change command is beyond the changeable range.
